(19) Europäisches Patentamt
European Patent Office
Office européen des brevets

(11) EP 1 165 646 B1

(12) EUROPÄISCHE PATENTSCHRIFT

(45) Veröffentlichungstag und Bekanntmachung des Hinweises auf die Patenterteilung:
**20.09.2006 Patentblatt 2006/38**

(21) Anmeldenummer: **00922553.3**

(22) Anmeldetag: **27.03.2000**

(51) Int Cl.:
***C08G 18/42*** (2006.01) ***C09D 175/06*** (2006.01)
***C09D 167/00*** (2006.01) ***C08G 18/40*** (2006.01)
***C08G 18/08*** (2006.01)

(86) Internationale Anmeldenummer:
**PCT/EP2000/002672**

(87) Internationale Veröffentlichungsnummer:
**WO 2000/059977 (12.10.2000 Gazette 2000/41)**

(54) **AUS MINDESTENS DREI KOMPONENTEN BESTEHENDER BESCHICHTUNGSSTOFF, VERFAHREN ZU SEINER HERSTELLUNG SOWIE SEINE VERWENDUNG**

COATING SUBSTANCE CONSISTING OF AT LEAST THREE COMPONENTS, METHOD FOR PRODUCING SAID COATING SUBSTANCE AND USE THEREOF

AGENT DE REVETEMENT CONSTITUE D'AU MOINS TROIS COMPOSANTS, SON PROCEDE DE PRODUCTION ET SON UTILISATION

(84) Benannte Vertragsstaaten:
**DE ES FR IT**

(30) Priorität: **01.04.1999 DE 19914899**

(43) Veröffentlichungstag der Anmeldung:
**02.01.2002 Patentblatt 2002/01**

(73) Patentinhaber: **BASF Coatings AG
48165 Münster (DE)**

(72) Erfinder:
- **LETTMANN, Bernhard
D-48317 Drensteinfurt (DE)**
- **NIENHAUS, Egbert
D-59387 Ascheberg (DE)**

(56) Entgegenhaltungen:
**DE-A- 4 300 616** **DE-A- 4 421 823**
**DE-C- 4 223 183** **US-A- 5 753 756**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 165 646 B1

Printed by Jouve, 75001 PARIS (FR)

## Beschreibung

Gegenstand der vorliegenden Erfindung ist ein aus mindestens drei Komponenten bestehender Beschichtungsstoff, enthaltend eine Komponente (I), enthaltend mindestens ein oligomeres oder polymeres Harz mit funktionellen Gruppen, die mit Isocyanatgruppen reagieren, als Bindemittel (A), eine Komponente (II), enthaltend mindestens ein Polyisocyanat als Vernetzungsmittel (B), und eine Komponente (III), welche Wasser enthält. Außerdem betrifft die vorliegende Erfindung ein Verfahren zur Herstellung dieses Beschichtungsstoffs sowie die Verwendung des Beschichtungsstoffs in der Automobilerst- und - reparaturlackierung, der industriellen Lackierung, inclusive Coil Coating und Container Coating, der Kunststofflackierung und der Möbellackierung.

Beschichtungsstoffe der eingangs genannten Art sind aus den deutschen Patentschriften DE-A-195 42 626 oder DE-A-44 21 823 bekannt. Diese bekannten Beschichtungsstoffe weisen bereits vergleichsweise geringe Oberflächenprobleme, wie Kocher oder Strukturen, sowie hinsichtlich des Glanzes, der Auspannung, der Spritzsicherheit, der Fülle, der Witterungsbeständigkeit und anderer wichtiger technologische Eigenschaften ein gutes Eigenschaftsprofil auf. Diese bekannten Beschichtungsstoffe enthalten hydrophile Polyester.

Die stetig strenger werdenden Anforderungen des Marktes machen es indes notwendig, daß diese bekannten Beschichtungsstoffe in ihrer Homogenität, ihrer Standsicherheit, ihrer Handhabung und ihrer Kochergrenzen noch weiter verbessert werden. Außerdem soll der Lösemittelgehalt noch weiter abgesenkt werden, als dies bislang möglich war. Des weiteren sollen die resultierenden Beschichtungen eine noch höhere Benzingbeständigkeit und einen noch geringeren Grauschleier aufweisen.

Demgemäß wurde der neue, aus mindestens drei Komponenten bestehende Beschichtungsstoff, enthaltend

(I) eine Komponente, enthaltend mindestens ein oligomeres oder polymeres Harz mit funktionellen Gruppen, die mit Isocyanatgruppen reagieren, als Bindemittel (A),

(II) eine Komponente, enthaltend mindestens ein Polyisocyanat als Vernetzungsmittel (B), und

(III) eine Komponente, welche Wasser enthält,

gefunden, welcher dadurch gekennzeichnet ist, daß die Komponente (I) und/oder (III) mindestens einen niedermolekularen und/oder oligomeren, im wesentlichen unverzweigten, hydrophoben Polyester (C) mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton, enthält oder enthalten.

Im folgenden wird der neue, aus mindestens drei Komponenten bestehende Beschichtungsstoff der Kürze halber als "erfindungsgemäßer Beschichtungsstoff" bezeichnet.

Die vorliegende Erfindung betrifft außerdem ein Verfahren zur Herstellung des erfindungsgemäßen Beschichtungsstoffs sowie seine Verwendung in der Automobilerst- und -reparaturlackierung, der industriellen Lackierung, inclusive Coil Coating und Container Coating, der Kunststofflackierung und der Möbellackierung.

Im Hinblick auf den Stand der Technik war es nicht zu erwarten, daß die Lösung der Aufgabe mit all ihren Vorteilen mit Hilfe der erfindungsgemäß zu verwendenden niedermolekularen und/oder oligomeren, im wesentlichen unverzweigten, hydrophoben Polyestern (C) mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton erzielt werden konnte.

Im folgenden werden diese erfindungsgemäß zu verwendenden niedermolekularen und/oder oligomeren, im wesentlichen unverzweigten, hydrophoben Polyester (C) der angegebenen Spezifikation als "hydrophobe Polyester (C)" bezeichnet.

Der erfindungsgemäßen Beschichtungsstoff zeichnet sich überraschenderweise durch ein Eigenschaftsprofil aus, das insbesondere hinsichtlich des Glanzes, der Fülle, der ausgesprochen geringen Kocherneigung, der Spritzsicherheit und des Verlaufs sowie der Witterungsbeständigkeit gegenüber dem Stand der Technik verbessert ist.

Es ist außerdem überraschend, daß der erfindungsgemäße Beschichtungsstoff aus den mindestens drei Komponenten, beispielsweise zumindest aus (I), (II) und (III), durch einfaches Mischen hergestellt werden kann, ohne daß aufwendige Apparaturen zum Mischen bzw. Dispergieren erforderlich sind, wie sie beispielsweise in der deutschen Patentschrift DE-A-195 10 651 beschrieben werden. Der erfindungsgemäße Beschichtungsstoff eignet sich daher insbesondere auch für den Bereich der Autoreparaturlackierung, da er vom Lackierer direkt vor seiner Applikation durch einfaches Mischen der Komponenten hergestellt und bei niedrigen Temperaturen ausgehärtet werden kann.

Vorteilhaft ist außerdem, daß der erfindungsgemäße Beschichtungsstoff nur einen geringen Gehalt an flüchtigen organischen Lösemitteln aufweist, obwohl er unter Verwendung organisch gelöster bzw. dispergierter Bindemittel und Vernetzer hergestellt wird.

Darüber hinaus gewährleistet der erfindungsgemäße Beschichtungsstoff eine hohe Variabilität, da nicht nur

für wäßrige Beschichtungsstoffe empfohlene Vernetzungsmittel, Pigmente und Additive, sondern auch solche, die in konventionellen Systemen verwendet werden, eingesetzt werden können.

Schließlich zeichnen sich die erfindungsgemäß zu verwendenden Komponenten (I), (II) und (III) des erfindungsgemäßen Beschichtungsstoffs durch eine sehr gute Lagerstabilität aus, die der von konventionellen Beschichtungsstoffen entspricht.

Der erfindungsgemäße Beschichtungsstoff ist thermisch und/oder mit aktinischer Strahlung härtbar.

Im Rahmen der vorliegenden Erfindung bedeutet der Begriff "thermische Härtung" die durch Hitze initiierte Härtung einer Schicht aus einem Beschichtungsstoff, bei der üblicherweise ein separat vorliegendes Vernetzungsmittel angewandt wird. Üblicherweise wird dies von der Fachwelt als Fremdvernetzung bezeichnet.

Im Rahmen der vorliegenden Erfindung ist unter aktinischer Strahlung Elektronenstrahlung oder vorzugsweise UV-Strahlung zu verstehen. Die Härtung durch UV-Strahlung wird üblicherweise durch radikalische oder kationische Photoinitiatoren initiiert.

Werden die thermische und die Härtung mit aktinischem Licht bei einem Beschichtungsstoff gemeinsam angewandt, spricht man auch von "Dual Cure".

Der erfindungswesentliche Bestandteil des erfindungsgemäßen Beschichtungsstoffs sind die hydrophoben Polyester (C).

Erfindungsgemäß sind sie in den nachstehend im Detail beschriebenen Komponenten (I) und/oder (III) enthalten. Hierbei ist es von Vorteil, wenn sie hierin in einer solchen Menge enthalten sind, daß im fertigen erfindunsgemäßen Beschichtungsstoff ein Gewichtsverhältnis der nachstehend im Detail beschriebenen Bindemittel (A) zu hydrophoben Polyestern (C) bis zu 30 : 1, vorzugsweise bis zu 20 : 1, besonders bevorzugt bis zu 15 : 1 und insbesondere bis zu 10 : 1 resultiert. Erfindungsgemäß ist es von besonderem Vorteil, wenn die hydrophoben Polyester (C) überwiegend oder nur in der Komponente (I) vorliegen.

Die hydrophoben Polyester (C) können niedermolekulare Verbindungen sein, welche ein Molekulargewicht von insbesondere 300 bis 700 Dalton aufweisen. Erfindungsgemäß sind niedermolekulare hydrophobe Polyester (C) von Vorteil, welche unter den Bedingungen der Herstellung und der Applikation des erfindungsgemäßen Beschichtungsstoffs nicht flüchtig sind.

Die hydrophoben Polyester (C) können indes auch oligomere Verbindungen sein, welche ein zahlenmittleres Molekulargewicht Mn von 400 bis 2.000, vorzugsweise von 450 bis 1.500, besonders bevorzugt von 600 bis 1.200 und insbesondere von 650 bis <1.000 aufweisen.

Die niedermolekularen und oligomeren hydrophoben Polyester (C) können einzeln oder als Gemisch verwendet werden.

Die Polyester (C) sind hydrophob. Im Rahmen der vorliegenden Erfindung bezeichnet der Begriff "hydrophob" nach DIN EN ISO 862: 1995-10 die konstitutionelle Eigenschaft eines Moleküls, sich gegenüber Wasser exophil zu verhalten, d. h. es zeigt die Tendenz, in Wasser nicht einzudringen oder die wäßrige Phase zu verlassen.

Die hydrophoben Polyester (C) sind im wesentlichen unververzweigt, d. h., daß ihre Moleküle im Gegensatz zu den nachstehend als Reaktivverdünner beschriebenen Dendrimeren im wesentlichen linear sind.

Die hydrophoben Polyester (C) weisen mindestens 2, vorzugsweise 4 und insbesondere 3 Hydroxylgruppen im Molekül auf. Vorteilhafterweise wird die Anzahl der Hydroxylgruppen so gewählt, daß eine OH-Zahl von 56 bis 500, vorzugsweise 70 bis 450, besonders bevorzugt 80 bis 350 und insbesondere 100 bis 300 mg KOH/g resultiert.

Die hydrophoben Polyester (C) sind im wesentlichen säuregruppenfrei, das heißt, daß sie eine Säurezahl < 3 mg KOH/g aufweisen.

Erfindungsgemäß bevorzugt verwendete hydrophobe Polyester (C) weisen die allgemeine Formel 1 auf,

$$\mathbf{[R^1\text{-}CH\ (OH)\text{-}CH_2\text{-}OOC\text{-}]_2R} \qquad (1),$$

worin die Variablen die folgende Bedeutung haben:

R = substituierter oder unsubstituierter zweiwertiger $C_1$- bis $C_{20}$-Alkandiyl-, $C_2$- bis $C_{20}$-Alkendiyl-, $C_4$- bis $C_{20}$-Cycloalkandiyl- oder -Cycloalkendiyl-, $C_6$- bis $C_{12}$-Aryliden- oder zweiwertiger $C_6$-bis $C_{20}$-Arylalkyl-, -Arylalkenyl-, -Arylcycloalkyl-, oder -Arylcycloalkenylrest; oder
substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Rest, welcher mindestens eine Carbonsäureestergruppe enthält;

$R^1$ = Wasserstoffatom oder einwertiger substituierter oder unsubstituierter $C_1$- bis $C_{20}$-Alkyl-, $C_2$- bis $C_{20}$-Alkenyl-, $C_4$-bis $C_{12}$-Cycloalkyl- oder -Cycloalkenyl-, $C_6$- bis $C_{12}$-Aryl- oder $C_6$- bis $C_{20}$-Arylalkyl-, -Arylalkenyl-, -Arylcycloalkyl-, -Arylcycloalkenyl-, - Alkylaryl-, -Alkenylaryl-, -Cycloalkylaryl-, -Cycloalkenylaryl-, - Alkylcycloalkyl-,

-Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder -Cycloalkenylalkenylrest.

Beispiele geeigneter $C_1$- bis $C_{20}$-Alkandiylreste R sind Methylen, Ethylen, Propan-1,3-diyl, Tetramethylen, Pentamethylen, Hexamethylen, Heptamethylen, Dodecan-1,12-diyl oder Hexadecan-1,16-diyl.

Beispiele geeigneter $C_2$- bis $C_{20}$-Alkendiylreste R sind Ethen-1,2-diyl, Propen-1,3-diyl oder Decen-1,12-diyl.

Beispiele geeigneter $C_4$- bis $C_{20}$-Cycloalkandiylreste R sind Cyclopentan-1,2-oder -1,3-diyl oder Cyclohexan-1,2-, -1,3- oder -1,4-diyl.

Beispiele geeigneter $C_4$- bis $C_{20}$-Cycloalkendiylreste R sind Cyclopenten-1,2-oder-1,3-diyl oder Cyclohexen-1,2-, -1,3- oder-1,4-diyl,

Beispiele geeigneter $C_6$- bis $C_{12}$-Arylidenreste R sind 1,2-, 1,3- oder 1,4-Phenylen oder 1,3-, 1,4- oder 2,5-Naphthylen oder 1,4'-Biphenylen.

Beispiele geeigneter zweiwertiger $C_6$- bis $C_{20}$-Arylalkylreste R sind

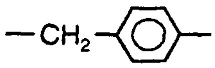 , 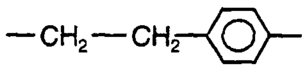 ,

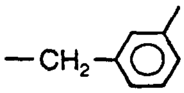 , 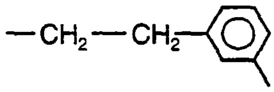 .

Beispiele geeigneter zweiwertiger Arylalkenylreste sind

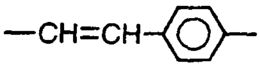 , 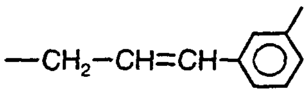

Beispiele geeigneter zweiwertiger Arylcycloalkykeste R sind

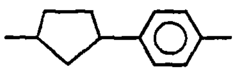 , 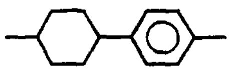 ,

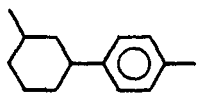 , 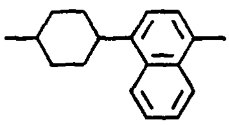 .

Beispiele geeigneter zweiwertiger Arylcycloalkenylreste R sind

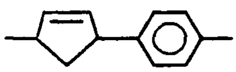 , 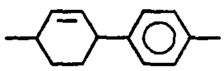 .

Beispiele geeigneter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Reste R, welche mindestens eine Carbonsäureestergruppe enthalten, sind

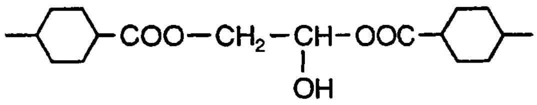 ,

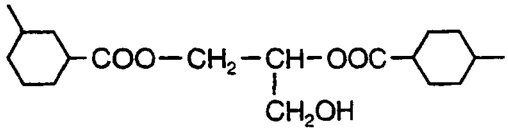 ,

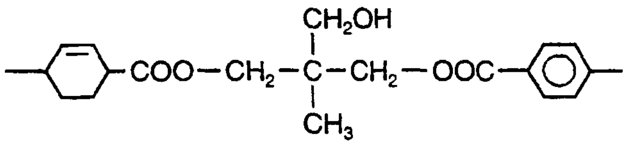 ,

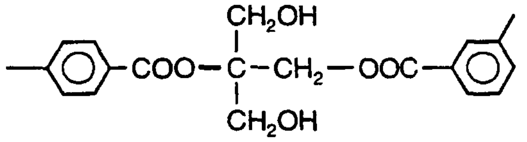 ,

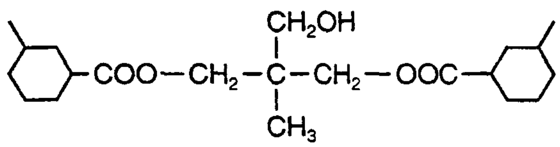 ,

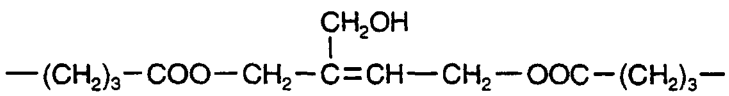 ,

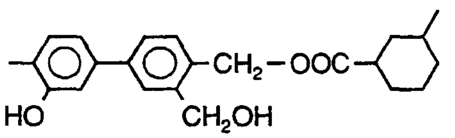 ,

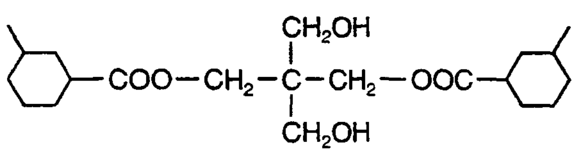 .

Als Substitutienten für diese Reste R kommen alle organischen funktionellen Gruppen in Betracht, welche im wesentlichen inert sind, d. h., daß sie keine Reaktionen mit den Vernetzungsmitteln (B)eingehen. Beispiele geeigneter inerter organischer Reste sind Halogenatome, Nitrogruppen, Nitrilgruppen oder Alkoxygruppen. Des weiteren kommen als Substitutienten funktionelle Gruppen in Betracht, welche mit den Vernetzungsmitteln (B) Vernetzungsreaktionen

eingehen wie Amino-, Thiol- oder Hydroxylgruppen, von denen die Hydroxylgruppen erfmdungsgemäß besonders vorteilhaft sind und deshalb besonders bevorzugt verwendet werden.

Erfindungsgemäß ist es von ganz besonderem Vorteil, wenn der Rest R mindestens eine Hydroxylgruppe als Substitutienten enthält.

Beispiele geeigneter erfindungsgemäß zu verwendender, gegebenenfalls substituierter $C_1$-$C_{10}$-Alkylreste R1 sind Methyl-, Ethyl-, Propyl-, Butyl-, Pentyl-, Hexyl-, Heptyl-, Octyl-, Nonyl- oder Decylreste.

Beispiele geeigneter substituierter oder unsubstituierter $C_2$- bis $C_{20}$-Alkenyl-, $C_4$- bis $C_{12}$-Cycloalkyl- oder -Cycloalkenyl-, $C_6$- bis $C_{12}$-Aryl- oder $C_6$- bis $C_{20}$-Arylalkyl-, -Arylalkenyl-, -Arylcycloalkyl-, -Arylcycloalkenyl-, - Alkylaryl-, -Alkenylaryl-, -Cycloalkylaryl-, -Cycloalkenylaryl-, - Alkylcycloalkyl-, -Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder Cycloalkenylalkenylreste $R^1$ sind

$-CH=CH_2$, $-CH_2-CH=CH_2$, $-(CH_2)_8-CH=CH-(CH_2)_3-CH_3$,

$-CH_2-CH=CH-CH=CH-CH_3$,

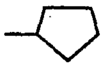 , 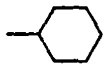 ,

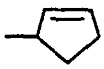 , 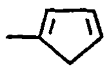 , 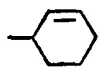 , 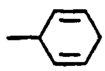 ,

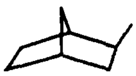 , 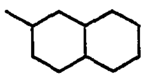 , 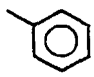 ,

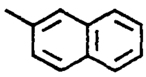 , 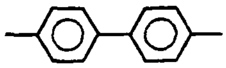 , 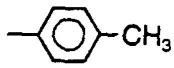 ,

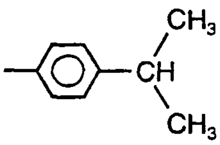 , 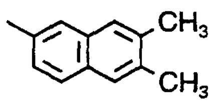 , 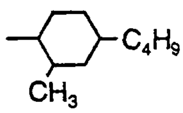 ,

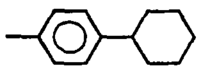 , 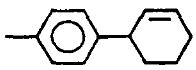 , 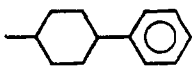 ,

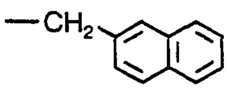 , 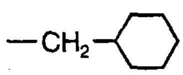 , 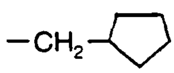 ,

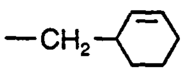 , 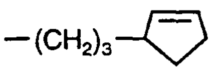 , 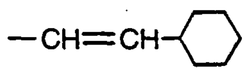 ,

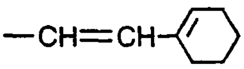 , 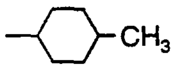 , 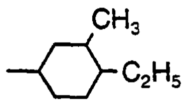 ,

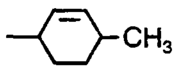 , 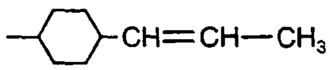 ,

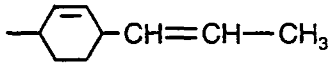 .

Erfindungsgemäß ist es von Vorteil, wenn der Rest $R^1$ substituiert ist.

Beispiele geeigneter Substitutienten für den Rest $R^1$ sind -F, -Cl, -Br, -I, -CN, -NO2 -OH, -$OR^2$, -SH, -$SR^2$, -NH2, -$NHR^2$, -N($NR^2$)2 und/oder -OOC-$R^2$, worin die Variable $R^2$ die Bedeutung von $R^1$, ausgenommen das Wasserstoffatom, hat.

Beispiele geeigneter Reste $R^2$ dieser Art sind die vorstehend bei den Resten $R^1$ beschriebenen.

Weitere Beispiele geeigneter Reste $R^2$ sind verzweigte $C_4$- bis $C_{12}$-Alkylreste, insbesondere 1,1-Dimethylethan-1-yl, -propan-1-yl, -butan-1-yl, -pentan-1-yl, -hexan-1-yl oder -heptan-1-yl, welche erfindungsgemäß von Vorteil sind und deshalb bevorzugt verwendet werden.

Erfindungsgemäß ist es von besonderem Vorteil, wenn der Rest R1 eine einfach substituierte Methylgruppe ist.

Des weiteren ist es erfindungsgemäß von besonderem Vorteil, wenn der Rest R1, insbesondere die Methylgruppe, mit -OOC-$R^2$ substituiert ist.

Die Herstellung der hydrophoben Polyester (C) weist keine methodischen Besonderheiten auf, sondern erfolgt mit Hilfe der üblichen und bekannten Methoden der Herstellung niedermolekularer und oligomerer Polyester. Beispiele geeigneter Methoden sind die nachstehend bei der Herstellung des Bindemittels (A2) beschriebenen.

Erfindungsgemäß besonders vorteilhafte niedermolekulare hydrophobe Polyester (C) können insbesondere durch die Umsetzung von Hydroxydicarbonsäuren mit Epoxiden hergestellt werden.

Beispiele geeigneter Hydroxydicarbonsäuren sind Tartronsäure, Äpfelsäure oder Weinsäure.

Beispiele geeigneter Epoxide, insbesondere glycidylgruppenhaltiger, sind Ethylenoxid, Propylenoxid, Epichlorhydrin, Glycidol, Glycidylether, insbesondere Aryl- und Alkylglycidylether, oder Glycidylester, insbesondere die Glycidylester von tertiären, stark verzweigten, gesättigten Monocarbonsäuren, welche unter dem Handelsnamen Versatic[R]-Säuren von der Firma Deutsche Shell Chemie vertrieben werden. Von diesen sind die Versatic[R]-Säureglycidylester, welche unter dem Handelsnamen Cardura[R] E10 vertrieben werden, ganz besonders vorteilhaft und werden deshalb ganz besonders bevorzugt verwendet.

Ein Beispiel für ganz besonders vorteilhafte niedermolekulare hydrophobe Polyester (C) ist das Umsetzungsprodukt von Äpfelsäure mit Cardura[R] E10.

Erfindungsgemäß besonders vorteilhafte oligomere hydrophobe Polyester (C) können insbesondere durch die Umsetzung der nachstehend bei den Bindemitteln (A2) beschriebenen Diole, Triole oder Tetrole mit den nachstehend bei den Bindemitteln (A2) beschriebenen Dicarbonsäuren sowie die Umsetzung der resultierenden Polyester mit den vorstehend beschriebenen Epoxiden hergestellt werden. Zur Herstellung der Polyester werden die Polyole in solchen molaren Verhältnissen miteinander umgesetzt, daß lineare Strukturen resultieren. Der Fachmann kann daher die geeigneten Verhältnisse aufgrund seiner Erfahrung oder anhand einfacher Vorversuche ermitteln. Im Falle der Diole liegt das molare Verhältnis von Hydroxylgruppen zu Carboxylgruppen vorteilhafterweise bei 1,0, im Falle der Triole vorteilhafterweise bei 1,5 und im Falle der Tetrole vorteilhafterweise bei 2,0. Die Umsetzung kann stufenweise oder in einem Eintopfverfahren durchgeführt werden.

Erfindungsgemäß sind Triole besonders vorteilhaft und werden deshalb besonders bevorzugt verwendet. Ein Beispiel für die besonders vorteilhaften Triole ist Trimethylolpropan, welches ganz besonders bevorzugt verwendet wird.

Erfindungsgemäß sind die aliphatischen und cycloaliphatischen Dicarbonsäuren besonders vorteilhaft und werden deshalb besonders bevorzugt verwendet. Ein Beispiel für die besonders vorteilhaften aliphatischen Dicarbonsäuren ist Adipinsäure; ein Beispiel für die besonders vorteilhaften cycloaliphatischen Dicarbonsäuren ist Hexahydrophthalsäure.

An Stelle der Dicarbonsäuren können, sofern existent, auch deren Anhydride oder ihre zur Umesterung befähigten Derivate wie die Alkylester verwendet werden.

Der weitere wesentliche Bestandteil der Komponente (I) des erfindungsgemäßen Beschichtungsstoffs ist mindestens ein in einem oder mehreren organischen, gegebenenfalls wasserverdünnbaren Lösemitteln gelöstes oder dispergiertes, oligomeres oder polymeres Harz mit funktionellen Gruppen, die mit Isocyanatgruppen reagieren, als Bindemittel (A).

Beispiele geeigneter erfindungsgemäß zu verwendender funktioneller Gruppen, die mit Isocyanatgruppen reagieren, sind Amino-, Thio- und/oder Hydroxylgruppen, von denen die Hydroxylgruppen besonders vorteilhaft sind und daher erfindungsgemäß besonders bevorzugt werden.

Somit handelt es sich bei den erfindungsgemäß bevorzugten Bindemittel (A) um hydroxylgruppenhaltige oligomere oder polymere Harze.

Beispiele geeigneter erfindungsgemäß bevorzugter Bindemittel (A) sind hydroxylgruppenhaltige lineare und/oder verzweigte und/oder blockartig, kammartig und/oder statistisch aufgebaute Poly(meth)acrylate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, von denen die Poly(meth)acrylate, die Polyester, die Polyurethane, die Polyether und die Epoxidharz-Amin-Addukte besonders vorteilhaft sind und deshalb besonders bevorzugt verwendet werden.

Hinsichtlich der Herstellbarkeit, der Handhabung und der besonders vorteilhaften Eigenschaften der hiermit hergestellten erfindungsgemäßen Beschichtungsstoff bieten die Poly(meth)acrylate, die Polyester und/oder die Polyurethane (A) ganz besondere Vorteile, weswegen sie erfindungsgemäß ganz besonders bevorzugt verwendet werden.

Neben den Hydroxylgruppen können diese Bindemittel (A) noch andere funktionelle Gruppen wie Acryloyl-, Amid -, Imid -, Carbonat- oder Epoxidgruppen enthalten.

Erfindungsgemäß ist es desweiteren von Vorteil, wenn mindestens eines der in der Komponente (I) jeweils angewandten oder alle der in der Komponente (I) jeweils angewandten Bindemittel (A) für sich gesehen in Wasser löslich oder dispergierbar sind.

Beispiele geeigneter wasserlöslicher oder -dispergierbarer Bindemittel (A) enthalten entweder

(i) funktionelle Gruppen, die durch Neutralisationsmittel und/oder Quaternisierungsmittel in Kationen überführt werden können, und/oder kationische Gruppen
oder

(ii) funktionelle Gruppen, die durch Neutralisationsmittel in Anionen überführt werden können, und/oder anionische Gruppen
und/oder

(iii) nichtionische hydrophile Gruppen.

Beispiele geeigneter erfindungsgemäß zu verwendender funktioneller Gruppen, die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder quaternäre Ammoniumgruppen, tertiäre Sulfoniumgruppen, insbesondere aber tertiäre Sulfoniumgruppen.

Beispiele geeigneter erfindungsgemäß zu verwendender funktioneller Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen sind Carboxylat-, Sulfonat- oder Phosphonatgruppen, insbesondere Carboxylatgruppen.

Beispiele geeigneter erfindungsgemäß zu verwendender nichtionischer hydrophiler Gruppen sind Polyethergrupppen, insbesondere Poly(alkylenether)gruppen.

Hinsichtlich der Herstellbarkeit, der Handhabung und der besonders vorteilhaften Eigenschaften der hiermit hergestellten erfindungsgemäßen Beschichtungsstoffe bieten die Bindemittel (A), welche die anionenbildenden Gruppen und/oder Anionen (ii), insbesondere die Carbonsäure- und/oder die Carboxylatgruppen enthalten, ganz besondere Vorteile, weswegen sie erfindungsgemäß ganz besonders bevorzugt verwendet werden.

Beispiele ganz besonders bevorzugter erfindungsgemäß zu verwendender Bindemittel (A) der letztgenannten Art sind

(A1) in einem oder mehreren organischen, gegebenenfalls wasserverdünnbaren Lösemitteln lösliche oder dispergierbare, Hydroxylgruppen und Carbonsäure- und/oder Carboxlylatgruppen enthaltende Acrylatcopolymerisate (A1) mit einem zahlenmittleren Molekulargewicht Mn zwischen 1.000 und 30.000 Dalton, einer OH-Zahl von 40 bis 200 mg KOH/g und einer Säurezahl von 5 bis 150 mg KOH/g,

(A2) in einem oder mehreren organischen, gegebenenfalls wasserverdünnbaren Lösemitteln lösliche oder dispergierbare, Hydroxylgruppen und Carbonsäure- und/oder Carboxlylatgruppen enthaltende hydrophile wasserdispergierbare Polyesterharze (A2) mit einem zahlenmittleren Molekulargewicht Mn zwischen 1.000 und 30.000 Dalton, einer OH-Zahl von 30 bis 250 mg KOH/g und einer Säurezahl von 15 bis 150 mg KOH/g und/oder

(A3) in einem oder mehreren organischen, gegebenenfalls wasserverdünnbaren Lösemitteln lösliche oder dispergierbare, Hydroxylgruppen und Carbonsäure- und/oder Carboxlylatgruppen enthaltende Polyurethanharze (A3) mit einem zahlenmittleren Molekulargewicht Mn zwischen 1.000 und 30.000 Dalton, einer OH-Zahl von 20 bis 200 mg KOH/g und einer Säurezahl von 5 bis 150 mg KOH/g.

Die Bindemittel (A1), (A2) und (A3) liegen einzeln oder als Gemisch in der Komponente (I) vor, wobei diese gegebenenfalls noch mindestens eines der vorstehend beschriebenen Bindemittel (A) enhalten, ausgenommen derjenigen Bindemittel (A), welche funktionelle Gruppen (i), die durch Neutralisationsmittel und/oder Quaternisierungsmittel in Kationen überführt werden können, und/oder kationische Gruppen (i) enthalten. Im folgenden werden diese mit den Bindemitteln (A1), (A2) und/oder (A3) gegebenenfalls verwendbaren Bindemittel (A) als Bindemittel (A4) bezeichnet.

Erfindungsgemäß bieten die Komponenten (I), welche die Bindemitteln (A1), (A2) und/oder (A3) sowie gegebenenfalls (A4) enthalten, ganz besondere Vorteile und werden deshalb ganz besonders bevorzugt verwendet.

Desgleichen weisen die erfindungsgemäßen Beschichtungsstoff, welche diese ganz besonders bevorzugte Komponente (I) enthalten, ganz besondere Vorteile auf und werden deshalb ganz besonders bevorzugt verwendet.

Wenn die Vermischung der Komponenten (I), (II) und (III) durch manuelles Rühren erfolgen soll, ist es für das erfindungsgemäße Beschichtungsstoff von Vorteil, wenn die Bindemittel (A), insbesondere die Bindemitte (A1), (A2) und/oder (A3) und (A4), so ausgewählt werden, daß die 50 %ige Lösung der Bindemittel (A) in Ethoxyethylpropionat bei 23°C eine Viskosität von ≤ 10 dPas aufweist. Sofern eine maschinelle Vermischung erfolgen soll, können höherviskose Bindemittel (A) verwendet werden, deren 50 %ige Lösung in Ethoxyethylpropionat bei 23°C eine Viskosität von ≤ 100 dPas aufweist. Die Viskosität wird nach oben lediglich durch die Leistungsfähigkeit der Mischaggregate begrenzt.

Als Acrylatcopolymerisate (A1) sind alle Acrylatcopolymerisate mit den angegebenen OH-Zahlen, Säurezahlen, Molekulargewichten und Viskositäten geeignet.

Insbesondere werden Acrylatcopolymerisate (A1) eingesetzt, die erhältlich sind durch Polymerisation in einem organischen Lösemittel oder einem Lösemittelgemisch und in Gegenwart mindestens eines Polymerisationsinitiators von

a1) einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,

a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,

a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und

a4) gegebenenfalls einem oder mehreren Vinylestern von in alpha-Stellung verzweigten Monocarbonsäuren mit 5 bis 18 C-Atomen je Molekül und/oder

a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,

a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,

wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

Zur Herstellung der erfindungsgemäß eingesetzten Polyacrylatharze kann als Monomer (a1) jeder mit (a2), (a3), (a4), (a5) und (a6) copolymerisierbare (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate; verwendet werden. Diese können in untergeordneten Mengen höherfunktionelle (Meth)Acrylsäurealkyl- oder cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat;Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen.

Als Monomere (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind, wie Hydroxyalkylester der Acrylsäure, Methacrylsäure oder einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; 1,4-Bis(hydroxymethyl)cyclohexan-, Octahydro-4,7-methano-1H-inden-dimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether; verwendet werden. Hinsichtlich dieser höherfunktionellen Monomeren (a2) gilt das für die höherfunktionellen Monomeren (a1) Gesagte sinngemäß. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Monomer (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren verwendet werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Komponente (a3) kommen desweiteren Maleinsäuremono(meth)acryloyloxyethylester, Bernsteinsäuremono(meth)acryloyloxyethylester und Phthalsäuremono(meth)acryloyloxyethylester in Betracht.

Als Monomere (a4) werden ein oder mehrere Vinylester von in alpha-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Monomere (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl-

oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Monomere (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren verwendet werden. Als Komponente (a6) kommmen

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- (Meth)Acrylsäureamide wie (Meth)Acrylsäureamid, N-Methyl -, N,N-Dimethyl-, N-Ethyl-, N,N-Diethyl-, N-Propyl-, N, N-Dipropyl, N-Butyl-, N,N-Dibutyl-, N-Cyclohexyl- und/oder N,N-Cyclohexyl-methyl-(meth)acrylsäureamid;

- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol, und/oder Vinyltoluol;

- Nitrile wie Acrylnitril und/oder Methacrylnitril;

- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure; und/oder

- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth) acrylsäure;

in Betracht.

Vorzugsweise werden vinylaromatische Kohlenwasserstoffe eingesetzt.

Es ist von Vorteil, die Polysiloxanmakromonomeren (a6) zusammen mit anderen Monomeren (a6) verwenden. Hierbei soll die Menge des oder der Polysiloxanmakromonomeren (a6) zur Modifizierung der Acrylatcopolymerisate (A1) weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A1) eingesetzten Monomeren, betragen. Die Verwendung derartiger Polysiloxanmakromonomerer führt zu einer Verbesserung des Slips und des Verlaufs der erfindungsgemäßen Beschichtungen.

Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze werden erhalten durch Polymerisation von

(a1) 20 bis 60 Gew.-%, bevorzugt 30 bis 50 Gew.-%, der Komponente (a1),

(a2) 10 bis 50 Gew.-%, bevorzugt 15 bis 40 Gew.-%, der Komponente (a2),

(a3) 1 bis 15 Gew.-%, bevorzugt 1 bis 8 Gew.-%, der Komponente (a3),

(a4) 0 bis 25 Gew.-%, bevorzugt 5 bis 15 Gew.-%, der Komponente (a4),

(a5) 0 bis 25 Gew.-%, bevorzugt 5 bis 15 Gew.-%, der Komponente (a5) und

(a6) 5 bis 30 Gew.-%, bevorzugt 10 bis 20 Gew.-%, der Komponente (a6),

wobei die Summe der Gewichtsanteile der Komponenten (a1) bis (a6) jeweils 100 Gew.-% beträgt.

Die Herstellung der erfindungsgemäß eingesetzten Polyacrylatharze (A1) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Dabei können die Lösemittel an der Reaktion mit der vernetzenden Komponente (II) teilnehmen und somit als Reaktivverdünner (E) wirken.

Beispiele geeigneter Reaktiverdünner (E) für die thermische Härtung sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl von 200 bis 450, ein zahlenmittleres Molekulargewicht Mn von 400 bis 1000 und ein massenmittleres Molekulargewicht Mw von 600 bis 1100 auf;

Weitere Beispiele geeigneter Reaktivverdünner (E) sind verzweigte, cyclische und/oder acyclische $C_9$-$C_{16}$-Alkane, die mit mindestens zwei Hydroxylgruppen funktionalisiert sind, insbesondere Diethyloctandiole.

Weitere Beispiele geeigneter Reaktivverdünner (E) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner (E) sind Polycarbonatdiole, Polyesterpolyole, Poly(meth)acrylatdiole oder hydroxylgruppenhaltige Polyadditionsprodukte.

Beispiele geeigneter isocyanatreaktiver Lösemittel, welche als monofunktionelle Reaktivverdünner (E) angesehen werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykolmonobutylether, Trimethylolpropan, 2-Hydroxypropionsäureethylester oder 3-Methyl-3-methoxybutanol sowie Derivate auf Basis von Propylenglykol, z.B. Isopropoxypropanol genannt.

Die genannten Reaktivverdünner und/oder die isocyanatreaktiven Lösemittel (E) können auch in der Komponente (III) vorhanden sein.

Es ist dabei auch möglich, die Polyacrylatharze (A1) zunächst in einem Lösemittel, das nicht wasserverdünnbar ist, herzustellen und dieses Lösemittel nach der Polymerisation gegebenenfalls teilweise durch wasserverdünnbares Lösemittel zu ersetzen.

Beispiele geeigneter Polymerisationsinitiatoren sind freie Radikale bildende Initiatoren, wie z.B. tert.-Butylperoxyethylhexanoat, Benzoylperoxid, Di-tert.-Amylperoxid, Azobisisobutyronitril und tert.-Butylperbenzoat genannt. Die Initiatoren werden bevorzugt in einer Menge von 1 bis 25 Gew.-%, besonders bevorzugt von 2 bis 10 Gew.-%, bezogen auf das Gesamtgewicht der Monomeren, eingesetzt.

Die Polymerisation wird zweckmäßigerweise bei einer Temperatur von 80 bis 200°C, vorzugsweise 110 bis 180°C, durchgeführt.

Bevorzugt wird das Polyacrylatharz (A1) nach einem Zweistufenverfahren hergestellt, da so die resultierenden erfindungsgemäßen Beschichtungsstoffe eine bessere Verarbeitbarkeit aufweisen. Bevorzugt werden daher Polyacrylatharze eingesetzt, die erhältlich sind, indem

1. ein Gemisch aus (a1), (a2), (a4), (a5) und (a6) oder ein Gemisch aus Teilen der Komponenten (a1), (a2), (a4), (a5) und (a6) in einem organischen Lösemittel und/oder in einem der vorstehend genannten Reaktivverdünner polymerisiert wird,

2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und

3. nach Beendigung der Polymerisation das erhaltene Polyacrylatharz gegebenenfalls zumindest teilweise neutralisiert wird, d.h. die Säuregruppen in die entsprechende Säureaniongruppen überführt werden.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten (a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie gegebenenfalls Teilen der Komponenten (a1) und (a6) vorgelegt.

Bevorzugt ist außerdem die Herstellung der erfindungsgemäß eingesetzten Polyacrylatharze (A1) durch ein Zweistufenverfahren, bei dem die erste Stufe 1 bis 8 Stunden, vorzugsweise 1,5 bis 4 Stunden, dauert und die Zugabe der Mischung aus (a3) und dem gegebenenfalls vorhandenen Rest der Komponenten (a1), (a2), (a4), (a5) und (a6) innerhalb von 20 bis 120 Minuten, vorzugsweise innerhalb von 30 bis 90 Minuten, erfolgt. Nach Beendigung der Zugabe der Mischung aus (a3) und dem gegebenenfalls vorhandenen Rest der Komponenten (a1), (a2), (a4), (a5) und (a6) wird so lange weiter polymerisiert, bis alle eingesetzten Monomeren im wesentlichen vollständig umgesetzt worden sind. Hierbei kann sich die zweite Stufe unmittelbar der ersten anschließen. Indes kann mit der zweiten Stufe erst nach einer gewissen Zeit, beispeilsweise nach 10 min bis 10 Stunden, begonnen werden.

Die Menge und Zugabegeschwindigkeit des Initiators wird vorzugsweise so gewählt, daß ein Polyacrylatharz (A1) mit einem zahlenmittleren Molekulargewicht Mn von 1000 bis 30.000 Dalton erhalten wird. Es ist bevorzugt, daß mit dem Initiatorzulauf einige Zeit, im allgemeinen ca. 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Polyacrylatharze (A1) bei einem nicht allzu hohen Polymerisationsfestkörper, bevorzugt bei einem Polymerisationsfestkörper von 80 bis 50 Gew.-%, bezogen auf die Comonomeren, polymerisiert und anschließend die Lösemittel teilweise destillativ entfernt, so daß die entstehenden Polyacrylatharzlösungen (A1) einen Festkörpergehalt von bevorzugt 100 bis 60 Gew.-% aufweisen.

Die Herstellung der erfindungsgemäß zu verwendende Polyacrylatharze (A1) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter (Co)Polymerisationsverfahren werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität ν des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i r_i d \; \nu^{-1} (d/r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die

Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Als Polyester (A2) sind alle Polyester mit den vorstehend angegebenen OH-Zahlen, Säurezahlen, Molekulargewichten und Viskositäten geeignet.

Insbesondere werden Polyester (A2) eingesetzt, die erhältlich sind durch Umsetzung von

p1) gegebenenfalls sulfonierten Polycarbonsäuren oder deren veresterungsfähigen Derivaten, gegebenenfalls zusammen mit Monocarbonsäuren,

p2) Polyolen, gegebenenfalls zusammen mit Monoolen,

p3) gegebenenfalls weiteren modifizierenden Komponenten und

p4) gegebenenfalls einer mit dem Reaktionsprodukt aus (p1), (p2) und gegebenenfalls (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) werden aromatische und/oder aliphatische Polycarbonsäuren eingesetzt.

Beispiele für geeignete Polycarbonsäuren sind Phthalsäure, Isophthalsäure, Terephthalsäure, Phthalsäure-, Isophthalsäure- oder Terephthalsäuremonosulfonat, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure oder Cyclobutantetracarbonsäure. Die cycloaliphtatischen Polycarbonsäuren können sowohl in ihrer cis- als auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten (p2) zur Herstellung des Polyesters (A2) sind mehrwertige Alkohole, wie Ethylenglykol, Propandiole, Butandiole, Hexandiole, Hydroxypivalinsäureneopentylester, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Homopentaerythrit, Dipentaerythrit, Trishydroxiethylisocyanat, Polyethylenglykol, Polypropylenglykol, gegebenenfalls zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen. Des weiteren kommen die nachstehend bei den Bindemitteln (A3) beschriebenen Diole (u1) der allgemeinen Formel 2 und die Diole (u2) der allgemeinen Formel 3 in Betracht.

Als Komponente (p3) zur Herstellung der Polyester (A2) geeignet sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxydverbindungen, gegebenenfalls auch Monoisocyanate und/oder Monoepoxydverbindungen verwendet. Geeignete Komponenten (p3) sind beispielsweise in der DE-A-40 24 204 auf Seite 4, Zeilen 4 bis 9, beschrieben.

Als Komponente (p4) zur Herstellung der Polyester (A2) geeignet sind Verbindungen, die außer einer gegenüber

den funktionellen Gruppen des Polyesters (A2) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A2) erfolgt nach den bekannten Methoden der Veresterung, wie dies beispielsweise in der DE-A-40 24 204, Seite 4, Zeilen 50 bis 65, beschrieben ist.
Die Umsetzung erfolgt dabei üblicherweise bei Temperaturen zwischen 180 und 280°C, gegebenenfalls in Gegenwart eines geeigneten Veresterungskatalysators, wie z.B. Lithiumoctoat, Dibutylzinnoxid, Dibutylzinndilaurat oder para-Toluolsulfonsäure.

Üblicherweise wird die Herstellung der Polyester (A2) in Gegenwart geringer Mengen eines geeigneten Lösemittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Besonders bevorzugt werden als Komponente (A2) Polyester eingesetzt, die nach einem zweistufigen Verfahren hergestellt worden sind, indem zunächst ein hydroxylgruppenhaltiger Polyester mit einer OH-Zahl von 100 bis 300 mgKOH/g, einer Säurezahl von weniger als 10 mgKOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride, wie z.B. Hexahydrophthalsäureanhydrid, Trimellithsäureanhydrid, Pyromellithsäureanhydrid, Phthalsäureanhydrid, Camphersäureanhydrid, Tetrahydrophthalsäureanhydrid, Bernsteinsäureanhydrid und Gemische dieser und/oder anderer Anhydride und insbesondere Anhyride aromatischer Polycarbonsäuren, wie Trimellithsäureanhydrid, geeignet.

Es ist gegebenenfalls möglich, daß das Polyacrylatharz (A1) zumindest teilweise in Gegenwart des Polyesters (A2) hergestellt worden ist. Vorteilhafterweise werden in diesem Fall mindestens 20 Gew.-% und besonders vorteilhafterweise 40 bis 80 Gew.-% der Komponente (A1) in Gegenwart der Komponente (A2) hergestellt.
Die gegebenenfalls restlich vorhandene Menge der Komponente (A1) wird der Bindemittellösung anschließend zugegeben. Dabei ist es möglich, daß dieses bereits polymerisierte Harz die gleiche Monomerzusammensetzung aufweist wie das in Gegenwart des Polyesters aufgebaute Polyacrylatharz. Es kann aber auch ein hydroxylgruppenhaltiges Polyacrylatharz mit einer unterschiedlichen Monomerzusammensetzung zugefügt werden. Außerdem ist es möglich, eine Mischung verschiedener Polyacrylatharze und/oder Polyester zuzufügen, wobei gegebenenfalls ein Harz die gleiche Monomerzusammensetzung aufweist wie das in Gegenwart des Polyesters aufgebaute Polyacrylatharz.

Als hydroxyl- und säuregruppenhaltiges erfindungsgemäß zu verwendendes Polyurethanharz (A3) sind alle Polyurethanharze mit den angegebenen OH-Zahlen, Säurezahlen, Molekulargewichten und Viskositäten geeignet.

Geeignete Polyurethanharze werden beispielsweise in den folgenden Schriften beschriebenen: EP-A-355 433, DE-A-35 45 618, DE-A-38 13 866. DE-A-32 10 051, DE-A-26 24 442, DE-A-37 39 332, US-A-4,719,132, EP-A-89 497, US-A-4,558,090, US-A-4,489,135, DE-A-36 28 124, EP-A-158 099, DE-A-29 26 584, EP-A-195 931, DE-A-33 21 180 und DE-A-40 05 961.

In der Komponente (I) werden vorzugsweise Polyurethanharze (A3) eingesetzt, die durch Umsetzung von isocyanatgruppenhaltigen Präpolymeren mit gegenüber Isocyanatgruppen reaktiven Verbindungen herstellbar sind.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150°C, bevorzugt 50 bis 130°C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und reaktionsträge anionische bzw. zur Anionenbildung befähigte Gruppen enthalten. Es können auch niedermolekulare Polyole mit einem Molekulargewicht von 60 bis zu 400 Dalton, zur Herstellung der isocyanatgruppenhaltigen Präpolymere mitverwendet werden. Es werden dabei Mengen von bis zu 30 Gew.-% der gesamten Polyol-Bestandteile, bevorzugt etwa 2 bis 20 Gew.-%, eingesetzt.

Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer zahlenmittleren Molerkulargewicht Mn von 400 bis 5000 Dalton bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden.

Bevorzugt besteht die zur Herstellung der Polyurethanharze eingesetzte Alkoholkomponente zumindest zu einem gewissen Anteil aus

$u_1$) mindestens einem Diol der Formel 2

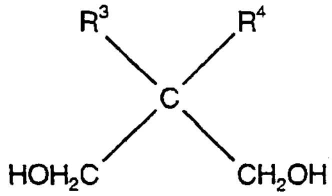

(2),

in der $R^3$ und $R^4$ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß $R^3$ und/oder $R^4$ nicht Methyl sein darf, und/oder

$u_2$) mindestens einem Diol der Formel 3

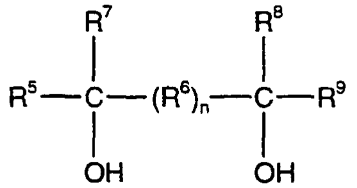

(3),

in der $R^5$, $R^7$, $R^8$ und $R^9$ jeweils gleiche oder verschiedene Reste darstellen und für einen Alkylrest mit 1 bis 6 C-Atomen, einen Cycloalkylrest oder einen Arylrest stehen und $R^6$ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole ($u_1$) sind alle Propandiole der Formel 2 geeignet, bei denen entweder $R^3$ oder $R^4$ oder $R^3$ und $R^4$ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclo-hexyl-2-methylpropandiol-1,3 und andere.

Als Diole ($u_2$) (Formel 2) können beispielsweise 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Bevorzugt werden als Diole ($u_1$) 2-Propyl-2-ethylpropandiol-1,3, 2,2-Diethylpropandiol-1,3, 2-Butyl-2-ethylpropandiol-1,3 und 2-Phenyl-2-ethylpropandiol-1,3 und als Komponente ($u_2$) 2,3-Dimethyl-butandiol-2,3 sowie 2,5-Dimethylhexandiol-2,5 eingesetzt. Besonders bevorzugt werden als Komponente ($a_1$) 2-Butyl-2-ethyl-propandiol-1,3 sowie 2-Phenyl-2-ethylpropandiol-1,3 und als Komponente ($u_2$) 2,5-Dimethylhexandiol-2,5 eingesetzt.

Die Diole ($u_1$) und/oder ($u_2$) werden üblicherweise in einer Menge von 0,5 bis 15 Gew.-%, bevorzugt 1 bis 7 Gew.-% eingesetzt, jeweils bezogen auf das Gesamtgewicht der zur Herstellung der Polyurethanharze (A3) eingesetzten Aufbaukomponenten.

Als typische multifunktionelle Isocyanate zur Herstellung der Polyurethanharze werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendüsocyanat, Naphtylendiisocyanat, Diphenylmethandiisocyanat, Isophorondiisocyanat, Cyclobutandiisocyanat Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Zur Herstellung festkörperreicher Polyurethanharzlösungen werden insbesondere Diisocyanate der allgemei-

nen Formel 3

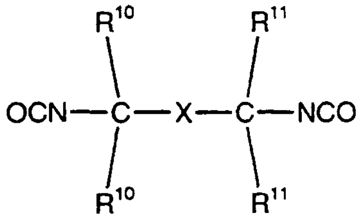

(3)

eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und $R^{10}$ und $R^{11}$ für einen Alkylrest mit 1 - 4 C-Atomen, bevorzugt für einen Methylrest, stehen. Diisocyanate der Formel 3 sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).
Weiterhin bevorzugt als Polyisocyanatkomponente sind Diisocyanate der Formel 4:

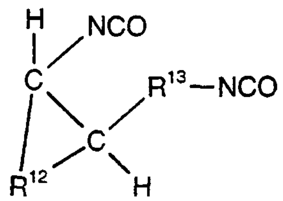

(4)

mit:

$R^{12}$ für einen zweiwertigen Alkyl- oder Aralkylrest mit 3 bis 20 Kohlenstoffatomen und
$R^{13}$ für einen zweiwertigen Alkyl- oder Aralkylrest mit 1 bis 20 Kohlenstoffatomen;

Insbesondere 1-Isocyanato-2-(3-isocyanatoprop-1-yl)cyclohexan.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet. Geeignete Gruppen dieser Art sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die mindestens eine gegenüber Isocyanatgruppen reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Vorzugsweise werden Alkansäuren mit zwei Substituenten am alphha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxyalkansäuren im unneutralisierten Präpolymer ergibt eine Säurezahl von wenigstens 5 mg KOH/g, vorzugsweise wenigstens 10 mg KOH/g. Bei sehr niedrigen Säurezahlen sind im allgemeinen weitere Maßnahmen zur Erzielung der Wasserdispergierbarkeit erforderlich. Die obere Grenze der Säurezahl liegt bei 150 mg KOH/g, vorzugsweise bei 40 mg KOH/g, bezogen auf den Feststoff. Bevorzugt liegt die

Säurezahl im Bereich von 20 bis 40 mg KOH/g.

Die Isocyanatgruppen des isocyanatgruppenhaltigen Präpolymers werden mit einem Modifizierungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere di-, tri- und/oder höherfunktionelle Polyole, eingesetzt. Als Beispiel für einsetzbare Polyole werden Trimethylolpropan, 1,3,4-Butantriol, Glycerin, Erythrit, Mesoerythrit, Arabit, Adonit usw. genannt. Bevorzugt wird Trimethylolpropan eingesetzt.

Zur Herstellung des erfindungsgemäßen Polyurethanharzes wird bevorzugt zunächst ein Isocyanatgruppen aufweisendes Präpolymer hergestellt, aus dem dann durch weitere Umsetzung, bevorzugt Kettenverlängerung, das gewünschte Polyurethanharz hergestellt wird. Die Umsetzung der Komponenten erfolgt dabei nach den gut bekannten Verfahren der organischen Chemie (vgl. z.B. Kunststoff-Handbuch, Band 7: Polyurethane, herausgegeben von Dr. Y. Oertel, Carl Hanser Verlag, München, Wien 1983). Beispiele für die Herstellung der Präpolymeren sind in der DE-OS 26 24 442 und der DE-OS 32 10 051 beschrieben. Die Herstellung der Polyurethanharze kann nach den bekannten Verfahren erfolgen (z.B. Acetonverfahren).

Die Umsetzung der Komponenten kann gegebenenfalls in Gegenwart eines Katalysators, wie Organozinnverbindungen und/oder tertiären Aminen, erfolgen.

Zur Herstellung der Präpolymeren werden die Mengen der Komponenten so gewählt, daß das Äquivalentverhältnis von NCO- zu OH-Gruppen zwischen 2,0 : 1,0 und > 1,0 : 1,0, bevorzugt zwischen 1,4: 1 und 1,1 : 1, liegt.

Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Als Komponente (A4) geeignet sind alle mit den übrigen Bestandteilen der Komponente (I) verträglichen, wasserverdünnbaren Bindemittel, beispielsweise acrylierte Polyurethanharze und/oder Polyesteracrylate.

Insbesondere enthält die ganz besonders bevorzugte Komponente (I) als Bindemittel (A)

(A1) mindestens 20 Gew.-% mindestens eines Polyacrylatharzes (A1),

(A2) 0 bis 30 Gew.-% mindestens eines Polyesters (A2),

(A3) 0 bis 80 Gew.-% mindestens eines Polyurethanharzes (A3) und

(A4) 0 bis 10 Gew.-% mindestens eines weiteren Bindemittels (A4),

wobei die Summe der Gewichtsanteile der Komponenten (A1) bis (A4) jeweils 100 Gew.-% beträgt.

Neben den erfindungswesentlichen hydrophoben Polyestern (C) und den Bindemitteln (A) kann die Komponente (I) als Bestandteil (D) alle lacküblichen Pigmente und/oder Füllstoffe in Anteilen von 0 bis 60 Gew.-%, bezogen auf Komponente (I), enthalten. Dabei können sowohl die in wäßrigen Beschichtungsstoffen üblichen Pigmente, die mit Wasser nicht reagieren bzw. sich in Wasser nicht lösen, als auch die üblicherweise in konventionellen Beschichtungsstoffn angewandtetn Pigmente eingesetzt werden. Die Pigmente können aus anorganischen oder organischen Verbindungen bestehen und können effekt- und/oder farbgebend sein. Der erfindungsgemäße Beschichtungsstoff gewährleistet daher aufgrund dieser Vielzahl geeigneter Pigmente eine universelle Einsatzbreite der Beschichtungsstoff und ermöglicht die Realisierung einer Vielzahl von Farbtönen.

Als Effektpigmente (D) können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasern, Cellulosefasern, Polyethylenfasern oder Holzmehl.

Als weiteren Bestandteil (F) kann die Komponente (I) mindestens ein organisches, gegebenenfalls wasserverdünnbares Lösemittel enthalten. Solche Lösemittel können auch an der Reaktion mit der vernetzenden Komponente (II) teilnehmen und somit als Reaktivverdünner (E) wirken.

Beispiele für geeignete Lösemittel (F) sind die schon bei der Herstellung der Polyacrylatharze (A1) genannten Verbindungen (siehe oben). Weiterhin geeignet sind Ester, Ketone, Ketoester, Glykolether wie Ethylen-, Propylen- oder Butylenglykolether, Glykolester wie Ethylen-, Propylen- oder Butylenglykolester oder Glykoletherester wie Ethoxyethylpropionat und Isopropoxypropanol. Außerdem kommen aliphatische und aromatische Lösemittel wie Dipenten, Xylol oder Shellsol$^R$ in Betracht.

Die Lösemittel (F) können weiterhin teilweise oder vollständig aus niedermolekularen oligomeren Verbindungen bestehen, die gegenüber der vernetzenden Komponente (II) reaktiv oder auch nicht reaktiv sein können. Sofern sie reaktiv sind, handelt es sich um Reaktiverdünner (E).

Beispiele geeigneter Reaktiverdünner (E) werden vorstehend beschrieben.

Als Bestandteil (G) enthält die Komponente (I) gegebenenfalls mindestens ein Neutralisationsmittel.

Beispiele geeigneter Neutralisationsmittel (G) für in Kationen umwandelbare funktionelle Gruppen (i) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel (G) für in Anionen umwandelbare funktionelle Gruppen (ii) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel (G) Dimethylethanolamin eingesetzt.

Die insgesamt in dem erfindungsgemäßen Beschichtungsstoff eingesetzte Menge an Neutralisationsmittel (G) wird so gewählt, daß 1 bis 100 Äquivalente, bevorzugt 50 bis 90 Äquivalente der funktionellen Gruppen (i) oder (ii) des Bindemittels (A) neutralisiert werden. Das Neutralisationsmittel (D) kann dabei der Komponente (I), (II) und/oder (III) zugesetzt werden. Bevorzugt wird das Neutralisationsmittel (G) aber der Komponente (III) zugesetzt.

Als Bestandteil (H) kann die Komponente (I) mindestens ein rheologiesteuemdes Additiv enthalten. Beispiele geeigneter rheologiesteuernder Additive sind die aus den Patentschriften WO 94/22968, EP-A-0 276 501, EP-A-0 249 201 oder WO 97/12945 bekannten; vemetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate. Bevorzugt werden als rheologiesteuernde Additive Polyurethane eingesetzt.

Die Komponente (I) kann außerdem noch mindestens ein weiteres übliches Lackadditiv (H) enthalten. Beispiele für derartige Additive (H) sind

- UV-Absorber;
- Radikalfänger;
- Katalysatoren für die Vernetzung;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufmittel;
- filmbildende Hilfsmittel wie Cellulose-Derivate;
- Flammschutzmittel,
- Photoinitiatoren, wie Photoinitiatoren vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten; beispielhaft sei hier auf Römpp Chemie Lexikon, 9. erweiterte und neubearbeitete Auflage, Georg Thieme Verlag Stuttgart, Bd. 4, 1991, verwiesen.

Weitere Beispiele geeigneter Additive (D) werden in dem Lehrbuch "Lackadditive" von Johan Bieleman, Wiley-VCH, Weinheim, New York, 1998, beschrieben.

Selbstverständlich können die genannten Additive (H) auch separat dem erfindungsgemäßen Beschichtungsstoff zugesetzt werden. In diesem Fall werden die Additive (H) dann als Komponente (IV) bezeichnet.

Der erfindungsgemäße Beschichtungsstoff kann des weiteren Reaktiverdünner (E) für die Härtung mit aktinischer Strahlung enthalten.

Als strahlenhärtbare Reaktivverdünner (E) kommen niedermolekulare polyfunktionelle ethylenisch ungesättigte Verbindungen in Betracht. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten.

Bevorzugt werden zur Herstellung des erfindungsgemäßen Beschichtungsstoffs Komponenten (I) eingesetzt, die aus

- 20 bis 90 Gew.-%, bevorzugt 35 bis 80 Gew.-%, des Bindemittels (A), insbesondere die polymeren oder oligomeren Harze (A1), (A2) und/oder (A3),
- 1 bis 40 Gew.-%, bevorzugt 3 bis 30 Gew.-%, besonders bevorzugt 5 bis 25 Gew.-% und insbesondere 10 bis 20 Gew.-% des hydrophoben Polyesters (C),
- 0 bis 60 Gew.-% mindestens eines Pigments und/oder Füllstoffs (D),
- 0 bis 60 Gew.-% mindestens eines Reaktiverdünners (E) für die thermische Härtung sowie gegebenenfalls für die Härtung mit aktinischer Strahlung,
- 0 bis 50 Gew.-%, bevorzugt 10 bis 40 Gew.-%, mindestens eines organischen, gegebenenfalls wasserverdünnbaren Lösemittels (F),
- 0 bis 20 Gew.-%, bevorzugt 0,1 bis 10 Gew.-%, mindestens eines Neutralisationsmittels (G),
- 0 bis 30 Gew.-%, bevorzugt 2 bis 20 Gew.-%, mindestens eines üblichen Hilfs- und/oder Zusatzstoffes (H) (Lackadditiv) und
- 0 bis 80 Gew.-% mindestens eines der nachstehend beschriebenen Bestandteile, welche mit aktinischer Strahlung härtbar sind

bestehen, wobei die Summe der Gewichtsanteile aller Bestandteile jeweils 100 Gew.-% beträgt.

Der weitere wesentliche Bestandteil des erfindungsgemäßen Beschichtungsstoffs ist mindestens ein Vernetzungsmittel (B), welches in der Komponente (II) enthalten ist.

Bei den Vernetzungsmitteln (B) handelt es sich um mindestens ein gegebenfalls in einem oder mehreren organischen, gegebenenfalls wasserverdünnbaren Lösemitteln gelöstes oder dispergiertes Di- und/oder Polyisocyanat (B).

Bei der Polyisocyanatkomponente (B) handelt es sich um organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5.000 und - sofern das manuelle Vermischen der Komponenten (I), (II) und (III) vorgesehen ist - insbesondere 100 bis 2.000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Methoxypropylacetat oder Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Polyisocyanate (B) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die bei der Beschreibung der Polyurethanharze (A3) genannten Isocyanate und/oder isocyanatgruppenhaltigen Polyurethanpräpolymere, die

durch Reaktion von Polyolen mit einem Überschuß an Polyisocyanaten hergestellt werden können und die bevorzugt niederviskos sind.

Weitere Beispiele geeigneter Polyisocyanate (B) sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Isocyanurat-, Biuret-, Allophanat-, Iminooxadiazindon-, Urethan-Harnstoff- und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7 - Diisocyanato-4-isocyanatomethyl-heptan oder 1-Isocyanato-2-(3-isocyanatopropyl)cyclohexan. 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Ganz besonders bevorzugt werden Polyisocyanate (B) mit Uretdion- und/oder Isocyanuratgruppen und/oder Allophanatgruppen oder Gemische solcher Polyisocyanate (B) auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate (B) bestehen.

Der erfindungsgemäße Beschichtungsstoff kann desweiteren isocyanatgruppenfreie Vernetzungsmittel (B') enthalten. Diese können je nach ihrer Reaktivität in den Komponenten (I), (II) und/oder (III) enthalten sein; wesentlich ist, daß die Vernetzungsmittel (B') die Lagerstabilität der betreffenden Komponente, etwa durch vorzeitige Vernetzung, nicht nachteilig beeinflussen. Der Fachmann kann deshalb die geeigneten Kombinationen von Vernetzungsmittel (B') einerseits und Komponenten (I), (II) und/oder (III) andererseits in einfacher Weise auswählen.

Beispiele geeigneter Vernetzungsmittel (B') sind blockierte Di- und/oder Polyisocyanate auf der Basis der vorstehend genannten Di- und/oder Polyisocyanate (B). Beispiele für geeignete Blockierungsmittel sind aliphatische, cycloaliphatische oder araliphatische Monoalkohole wie Methyl-, Butyl-, Octyl-, Laurylalkohol, Cyclohexanol oder Phenylcarbinol; Hydroxylamine wie Ethanolamin; Oxime wie Methylethylketonoxim, Acetonoxim oder Cyclohexanonoxim; Amine wie Dibutylamin oder Diisopropylamin; CH-acide verbindungen wie Malonsäurediester oder Acetessigsäureethylester; Heterocyclen wie Dimethylpyrazol; und/oder Lactame wie epsilon-Caprolactam. Weitere Beispiele für geeignete Blockierungsmittel gehen aus der Patentschrift US-Patentschrift US-A-4,444,954 hervor. Diese Verbetzungsmittel (B') können in den Komponenten (I), (II) und/oder (III) enthalten sein.

Weitere Beispiele für geeignete Vernetzungsmittel (B') sind Polyepoxide (F'), insbesondere alle bekannten aliphatischen und/oder cycloaliphatischen und/oder aromatischen Polyepoxide, beispielsweise auf Basis Bisphenol-A oder Bisphenol-F. Als Polyepoxide (F') geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether). Diese Vernetzungsmittel (B') können in den Komponenten (I) und/oder (III) enthalten sein.

Als Vernetzungsmittel (B') können auch Tris(alkoxycarbonylamino)triazine der Formel

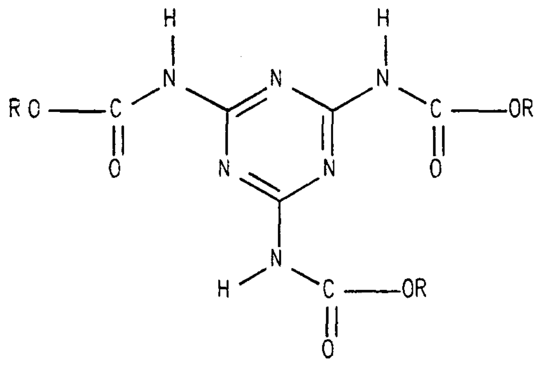

eingesetzt werden. Diese Vernetzungsmittel (B') können in den Komponenten (I) und/oder (III) enthalten sein.

Beispiele geeigneter Tris(alkoxycarbonylamino)triazine (B') werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel (B') verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4,710,542 und EP -B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Diese Vernetzungsmittel (B') können in den Komponenten (I) und/oder (III) enthalten sein.

Weitere Beispiele geeigneter Vernetzungsmittel (B') sind beta-Hydroxyalkylamide wie N,N,N',N'-Tetrakis(2-hydroxyethyl)adipamid oder N,N,N',N'-Tetrakis(2-hydroxypropyl)-adipamid. Diese Vernetzungsmittel (B') können in den Komponenten (I) und/oder (III) enthalten sein.

Weitere Beispiele geeigneter Vernetzungsmittel (B') sind Polyanhydride. Ein Beispiel für ein geeignetes Polyanhydrid ist Polysuccinsäureanhydrid.

Weitere Beispiele geeigneter Vernetzungsmittel (B') sind Siloxane, insbesondere Siloxane mit mindestens einer Trialkoxy- oder Dialkoxysilangruppe. Diese Vernetzungsmittel (B') können in den Komponenten (I) und/oder (II) enthalten sein.

Die Polyisocyanate (B) werden vorteilhafterweise in einer Menge von mindestens 70 Gew.-%, besonders bevorzugt in einer Menge von 80 bis 100 Gew.-%, bezogen auf das Gesamtgewicht der Vernetzungsmittel (B) und (B') in dem erfindungsgemäßen Beschichtungsstoff, eingesetzt.

Des weiteren kann die Komponente (II) die Bestandteile (F) und (H) der Komponente (I) enthalten, nur daß hier Bestandteile verwendet werden, welche nicht mit Isocyanatgruppen reagieren.

Bevorzugt werden zur Herstellung der erfindungsgemäßen Beschichtungsstoffe Komponenten (II) eingesetzt, die aus

(B) 50 bis 100 Gew.-%, bevorzugt 60 bis 90 Gew.-%, mindestens eines Vernetzungsmittels,

(F) 0 bis 50 Gew.-%, bevorzugt 10 bis 40 Gew.-%, mindestens eines organischen, gegebenenfalls wasserverdünnbaren Lösemittels und

(H) 0 bis 20 Gew.-%, bevorzugt 0 bis 10 Gew.-% mindestens eines üblichen Hilfs- und/oder Zusatzstoffes (Lackadditiv),

bestehen, wobei die Summe der Gewichtsanteile der Bestandeile jeweils 100 Gew.-% beträgt.

Der weitere wesentliche Bestandteile des erfindungsgemäßen Beschichtungsstoffs ist Komponente (III).

Erfindungsgemäß enthält diese Komponente (III) Wasser oder besteht hieraus. Erfindungsgemäß ist es von Vorteil, wenn die Komponente (III) außer Wasser noch weitere geeignete Bestandteile enthält.

Beispiele geeigneter Bestandteile sind die vorstehend im Detail beschriebenen Bindemittel (A), insbesondere die Bindemittel (A), welche

(i) funktionelle Gruppen, die durch Neutralisationsmittel und/oder Quaternisierungsmittel in Kationen überführt werden können, und/oder kationische Gruppen
oder

(ii) funktionelle Gruppen, die durch Neutralisationsmittel in Anionen überführt werden können, und/oder anionische Gruppen
und/oder

(iii) nichtionische hydrophile Gruppen

enthalten. Von diesen sind die in Wasser gelösten oder dispergierten Bindemittel (A1), (A2) und/oder (A3) besonders vorteilhaft und werden deshalb besonders bevorzugt verwendet.

Sofern die Komponente (I) Bindemittel (A) enthält, welche nicht oder nur in geringem Umfang in Wasser löslich

oder dispergierbar sind, empfiehlt es sich, vor allem die in Wasser gelösten oder dispergierten Bindemittel (A1), (A2) und/oder (A3) zu verwenden.

Die Bindemittel (A) können indes auch in der Form einer Pulverslurry vorliegen. Hierbei können die weiteren Vernetzungsmittel (B') in den Pulverslurry-Partikeln enthalten sein. Pulverslurries sind üblich und bekannt und werden beispielsweise in den Patentschriften EP-A-0 652 264, US-A-4,268,542, DE-A-196 13 547 oder die DE-A-195 18 392 beschrieben.

Darüber hinaus kann die Komponente (III) noch mindestens einen der vorstehend beschriebenen Reaktivverdünner (E) enthalten.

Ganz besonders bevorzugt werden zur Herstellung der erfindungsgemäßen Beschichtungsstoff Komponenten (III) eingesetzt, die aus

- 20 bis 90 Gew.-%, bevorzugt 30 bis 85 Gew.-% Wasser,
- 5 bis 80 Gew.-%, bevorzugt 10 bis 60 Gew.-% des Bindemittels (A), insbesondere die polymeren oder oligomeren Harze (A1), (A2) und/oder (A3), in in Wasser dispergierter oder gelöster Form,
- 0 bis 20 Gew.-%, bevorzugt 1 bis 10 Gew.-%, mindestens eines Neutralisationsmittels (G) und
- 0 bis 20 Gew.-%, bevorzugt 2 bis 10 Gew.-%, mindestens eines üblichen Hilfs- und/oder Zusatzstoffes (H) (Lackadditiv),

bestehen, wobei die Summe der Gewichtsanteile der Bestandteile jeweils 100 Gew.-% beträgt.

Die die in Wasser dispergierten Bindemittel (A), insbesondere die in Wasser dispergierten Bindemittel (A1), (A2) und/oder (A3), enthaltende Komponente (III) kann einerseits durch Herstellung der Bestandteile in organischen Lösemittel, anschließende Neutralisierung der Säuregruppen, insbesondere Carboxylgruppen, mit dem Neutralisierungsmittel (G) und abschließend Einbringen der neutralisierten Bestandteile in deionisiertes Wasser, andererseits durch Emulsionspolymerisation der monomeren Bausteine der Bindemittel (A) in Wasser hergestellt werden.

Vorzugsweise werden die Komponenten (A1), (A2) und/oder (A3) zunächst in organischen Lösemitteln hergestellt, anschließend neutralisiert und abschließend in neutralisierter Form als Sekundärdispersion in Wasser dispergiert.

Bei der Herstellung der in Wasser dispergierten Form der Polyacrylatharze (A1) wird die Polymerisation im organischen Lösemittel vorzugsweise mehrstufig mit seperaten Monomeren- und Initiatorzuläufen durchgeführt. Ganz besonders bevorzugt wird das Polyacrylatharz (A1) nach dem schon zuvor beschriebenen Zweistufenverfahren hergestellt, indem

1. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,

2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und

3. nach Beendigung der Polymerisation das erhaltene Polyacrylatharz (A1) gegebenenfalls zumindest teilweise neutralisiert wird.

Beispiele für geeignete Neutralisationsmittel (G), wie sie in Schritt 3. eingesetzt werden, sind die schon bei der Herstellung der Komponente (I) beschriebenen Ammoniak, Ammoniumsalze und Amine, wobei die Neutralisation in organischer oder in wäßriger Phase erfolgen kann. Die insgesamt zur Neutralisierung der Komponente (A1) eingesetzte Menge an Neutralisationsmittel (G) wird so gewählt, daß 1 bis 100 Äquivalente, bevorzugt 50 bis 90 Äquivalente der Säuregruppen des Bindemittels (A1) neutralisiert werden.

Als Bestandteile (A2) in Komponente (III) bevorzugt eingesetzt werden Polyester (A2), die nach einem zweistufigen Verfahren hergestellt worden sind, indem zunächst ein hydroxylgruppenhaltiger Polyester mit einer OH-Zahl von 100 bis 300 mg KOH/g, einer Säurezahl von weniger als 10 mg KOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist.

Nach Beendigung der Umsetzung wird der Polyester (A2) zumindestens teilweise neutralisiert, wobei wiederum die schon bei der Herstellung der Komponente (I) beschriebenen Neutralisationsmittel (G) zum Einsatz kommen und wobei die Neutralisation in organischer oder in wäßriger Phase erfolgen kann.

Zur Herstellung der Polyurethanharze (A3) für die Komponente (III) wird vorzugsweise zunächst ein Isocyanatgruppen aufweisendes Präpolymer hergestellt, aus dem dann durch weitere Umsetzung, bevorzugt durch Kettenverlängerung, das Polyurethanharz (A3) hergestellt wird.

Nach Beendigung der Polymerisation wird das erhaltene Poylurethanharz zumindest teilweise neutralisiert, wobei als geeignete Neutralisationsmittel (G) wiederum beispielhaft die schon bei der Herstellung der Komponente (I) beschriebenen Ammoniak, Ammoniumsalze und Amine zum Einsatz kommen können und wobei die Neutralisation in organischer oder in wäßriger Phase erfolgen kann.

Als gegebenenfalls zusätzlich anwesende Komponente (A4) geeignet sind alle mit den übrigen Bestandteilen der Komponente (III) verträglichen, wasserverdünnbaren und/oder wasserdispergierbaren Bindemittel, beispielsweise acrylierte Polyurethanharze und/oder Polyesteracrylate.

Die vorstehend beschriebenen wasserverdünnbaren und/oder wasserdispergierbaren Bindemittel (A), insbesondere die Bindemittel (A1), können nach ihrer Herstellung getrocknet, beispielsweise durch Sprühtrocknung oder Gefriertrocknung, und getrennt gelagert werden. Für die Herstellung des erfindungsgemäßen Beschichtungsstoffs können sie insbesondere der Komponente (III) als feinteilige, feste Komponente (V) zugegeben werden.

Darüber hinaus kann das erfindungsgemäße Beschichtungsmittel, bezogen auf seine Gesamtmenge, bis zu 40 Gew.-% Bestandteile (J) enthalten, welche mit aktinischem Licht, insbesondere UV-Strahlung, und/oder Elektronenstrahlung härtbar sind. Diese können in der Komponente (I), (II) und/oder (III), insbesondere in der Komponente (I), enthalten sein. Dies bietet den Vorteil, daß die erfindungsgemäßen Beschichtungsmittel thermisch härtbar und/oder strahlenhärtbar sind.

Als Bestandteile (J) kommen grundsätzlich alle mit aktinischer Strahlung härtbaren niedermolekularen, oligomeren und polymeren Verbindungen in Betracht, wie sie üblicherweise auf dem Gebiet der UV-härtbaren oder mit Elektronenstrahlung härtbaren Beschichtungsmittel verwendet werden. Diese strahlenhärtbaren Beschichtungsmittel enthalten üblicherweise mindestens ein, bevorzugt mehrere strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner (E) sowie gegebenenfalls einen oder mehrere Photoinitiatoren (H).

Vorteilhafterweise werden die strahlenhärtbaren Bindemittel als Bestandteile (J) verwendet. Beispiele geeigneter strahlenhärtbarer Bindemittel (J) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel (N) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Die Komponenten (I), (II) und (III) sowie gegebenenfalls (IV) und (V) werden zur Herstellung der erfindungsgemäßen Beschichtungsstoffe bevorzugt in solchen Mengen eingesetzt, daß das Äquivalentverhältnis von Hydroxylgruppen der Bindemittel (A) sowie der erfindungsgemäß zu verwendenden hydrophoben Polyester (C) und gegebenenfalls der Reaktivverdünner (E) zu den vernetzenden Gruppen des Vernetzungsmittels (B) sowie gegebenenfalls (B') zwischen 1 : 2 und 2 : 1, bevorzugt zwischen 1 : 1,2 und 1 : 1,5, liegt.

Die erfindungsgemäßen Beschichtungsstoff weisen außerdem bevorzugt einen Gesamtgehalt an

- erfindungswesentlichen hydrophoben Polyestern (C) 1 bis 40 Gew.-%, bevorzugt 2 bis 30 Gew.-%,
- Bindemitteln (A) von 10 bis 70 Gew.-%, bevorzugt von 20 bis 60 Gew.-%,
- Vernetzungsmitteln (B) von 5 bis 40 Gew.-%, bevorzugt von 10 bis 30 Gew.-%,
- Pigmenten und/oder Füllstoffen (D) von 0 bis 50 Gew.-%, bevorzugt von 0 bis 30 Gew.-%,
- Reaktiverdünnern (E) von 0 bis 30 Gew.-%,
- organischen Lösemitteln (F) von 5 bis 25 Gew.-%, bevorzugt von 7 bis 20 Gew.-%,
- Wasser von 20 bis 60 Gew.-%, bevorzugt von 30 bis 50 Gew.-%,
- üblichen Lackadditiven (H) von 0 bis 10 Gew.-% sowie
- mit aktinischer Strahlung härtbaren Bestandteile (J) von 0 bis 40 Gew.-%,

jeweils bezogen auf das Gesamtgewicht des erfindungsgemäßen Beschichtungsstoffs auf.

Die Herstellung der Komponente (I) erfolgt nach dem Fachmann bekannten Methoden durch Mischen und

gegebenenfalls Dispergieren der einzelnen Bestandteile. So erfolgt beispielsweise die Einarbeitung von farbgebenden Pigmenten (D) üblicherweise durch Anreiben (Dispergieren) der jeweiligen Pigmente in einem oder mehreren Bindemitteln. Das Anreiben der Pigmente erfolgt mit Hilfe üblicher Vorrichtungen, wie beispielsweise Perlmühlen und Sandmühlen.

Die Herstellung der Komponenten (II), (III) und gegebenenfalls (IV) erfolgt ebenfalls nach dem Fachmann gut bekannten Methoden durch Mischen bzw. Dispergieren der einzelnen Bestandteile.

Die erfindungsgemäßen Beschichtungsstoff werden insbesondere durch folgendes Mischverfahren aus den Komponenten (I), (II), (III) sowie gegebenenfalls (IV) und/oder (V) hergestellt:

Zur Herstellung der erfindungsgemäßen Beschichtungsstoff werden zunächst die Komponenten (I) und (II) gemischt, wobei bevorzugt diese Komponenten (I) und (II) kein Neutralisationsmittel (G) enthalten. Dann wird zu dieser Mischung gegebenenfalls die Komponente (IV) zugesetzt. Entweder wird dann die so erhaltene Mischung in die Neutralisationsmittel (G) enthaltende Komponente (III) gegeben und das erhaltene Beschichtungsstoff vermischt, oder es wird dann in die so erhaltene Mischung die Neutralisationsmittel (G) enthaltende Komponente (III) gegeben.

Ferner kann der erfindungsgemäße Beschichtungsstoff analog zu dem gerade beschriebenen Verfahren hergestellt werden, wobei allerdings das Neutralisationsmittel (G) nicht in der Komponente (III) enthalten ist, sondern vor der Zugabe der Komponente (III) separat zugegeben wird.

Außerdem kann der erfindungsgemäße Beschichtungsstoff auch dadurch hergestellt werden, daß die Komponente (I) zunächst mit dem Neutralisationsmittel (G) versetzt wird. Selbstverständlich kann anstelle dieser Mischung auch eine Komponente (I) eingesetzt werden, die bereits das Neutralisationsmittel (G) enthält. Die so erhaltene Komponente (I) wird dann mit der Komponente (II) und gegebenenfalls der Komponente (IV) gemischt (gleichzeitig oder aufeinanderfolgende Mischung mit (II) und gegebenenfalls (IV)), die so erhaltene Mischung wird dann entweder zu der Komponente (III) gegeben oder mit der Komponente (III) versetzt, und der so jeweils erhaltene erfindungsgemäße Beschichtungsstoff wird noch durch Rühren homogenisiert.

Wenn ausschließlich nichtionische hydrophile Gruppen (iii) enthaltende Bindemittel (A) verwendet werden, entfällt die Anwendung der Neutralisationsmittel (G).

Die erfindungsgemäßen Beschichtungsstoffe können durch übliche Applikationsmethoden, wie z.B. Spritzen, Rakeln, Streichen, Gießen, Tauchen oder Walzen auf beliebige grundierte oder ungrundierte Substrate aufgebracht werden.

Die Substrate können aus Metall, Holz, Kunststoff, Glas, Keramik oder Papier bestehen oder diese Stoffe als Verbunde enthalten. Vorzugsweise handelt es sich um Automobilkarosserieteile oder industrielle Bauteile, inclusive Container, aus Metall oder um Möbel.

Das Substrat kann mit einer Grundierung versehen sein. Im Falle von Kunststoffen handelt es sich um eine sogenannte Hydrogrundierung, welche vor der Applikation des erfindungsgemäßen Beschichtungsstoffs, insbesondere des Wasserbasislacks oder des Klarlacks, ausgehärtet wird. Im Falle von Metallen, insbesondere Automobilkarosserieteilen, handelt es sich um übliche und bekannte ausgehärtete Elektrotauchlacke, auf die ein Füller appliziert und eingebrannt wird.

Bei ihrer Verwendung in der Autoreparaturlackierung werden die erfindungsgemäßen Beschichtungsstoff üblicherweise bei Temperaturen von unter 120°C, bevorzugt bei Temperaturen von maximal 80°C, gehärtet. Bei ihrer Verwendung in der Autoserienlackierung werden auch höhere Härtungstemperaturen angewendet.

Sofern die erfindungsgemäßen Beschichtungsstoffe auch mit aktinischer Strahlung härtbare Bestandteile (J) enthalten, können sie zusätzlich in üblicher und bekannter Weise mit UV-Licht oder Elektronenstrahlung gehärtet werden.

Für die Aushärtung können die üblichen und bekannten Methoden wie Erhitzen in einem Umluftofen, Bestrahlen mit IR-Lampen sowie gegebenenfalls mit UV-Lampen angewandt werden.

Die erfindungsgemäßen Beschichtungsstoffe sind daher hervorragend für die Herstellung einschichtiger oder mehrschichtiger klarer oder pigmentierter Lackierungen für die Automobilerst- und -reparaturlackierung, die industrielle Lackierung, inclusive Coil Coating und Container Coating, die Kunststofflackierung und die Möbellackierung geeignet. Insbesondere werden die erfindungsgemäßen Beschichtungsstoffe als Klarlacke, Wasserbasislacke, Unidecklacke oder Grundierungen oder Füller in der Automobilerst- und - reparaturlackierung verwendet.

Im Falle der Herstellung mehrschichtiger Lackierungen können die erfindungsgemäßen Beschichtungsstoffe mit Vorteil nach dem Naß-in-naßVerfahren (Base Coat-Clear Coat-Verfahren) sowohl als Basislack als auch als Klarlack appliziert werden.

**Beispiele und Vergleichsversuch V1**

**Herstellbeispiel 1**

**Die Herstellung eines Polyacrylatharzes 1**

In einem für die Polymerisation geeigneten Stahlreaktor, ausgestattet mit Monomerzulauf, Initiatorzulauf, Temperaturmessvorrichtungen, Ölheizung und Rückflußkühler wurden 402,7 Gewichtsteile Ethoxyethylpropionat (EEP) eingewogen und auf 130°C erhitzt. Hierzu dosierte man unter Rühren innerhalb von zweieinhalb Stunden gleichmäßig eine Mischung aus 50 Gewichtsteilen Styrol, 20,5 Gewichtsteilen Methylmethacrylat, 26,6 Gewichtsteilen Laurylmethacrylat, 56,9 Gewichtsteilen Hydroxyethylacrylat, 41,4 Gewichtsteilen tert.-Butylacrylat und 46,1 Gewichtsteilen Butylmethacrylat. Gleichzeitig mit diesem Zulauf wurde der Initiatorzulauf gestartet. Die Initiatorlösung (21,2 Gewichtsteile tert.-Butylperoxyethylhexanoat in 34,6 Gewichtsteilen EEP) wurde gleichmäßig parallel zum ersten Zulauf zur Reaktionsmischung zudosiert. Anschließend wurde die Reaktionsmischung während einer Stunde auf 130°C erhitzt.

Anschließend wurde bei 130°C innerhalb von eineinhalb Stunden eine Monomermischung aus 30 Gewichtsteilen Styrol, 12,3 Gewichtsteilen Methylmethacrylat, 16 Gewichtsteilen Laurylmethacrylat, 72,3 Gewichtsteilen Hydroxyethylacrylat, 27,6 Gewichtsteilen Butylmethacrylat, 24,9 Gewichtsteilen tert.-Butylacrylat und 18,3 Gewichtsteilen Acrylsäure zudosiert. Gleichzeitig wurde mit dem Zulauf einer Initiatormischung aus 25,7 Gewichtsteilen EEP und 15,7 Gewichtsteilen tert.-Butylperoxyethylhexanoat begonnen. Der Initiatorzulauf wurde während zwei Stunden fortgesetzt.

Danach wurde die Reaktionsmischung während zwei Stunden auf 130°C erhitzt, wonach EEP bei 100 °C im Vakuum abdestilliert wurde, bis ein Festkörpergehalt von 80 Gew.-% erreicht war. Nach der Zugabe von 40,2 Gewichtsteilen Butylglykol bei 60 °C wurde mit EEP ein Festkörpergehalt von 75 Gew.-% eingestellt.

Es resultierte das Polyacrylatharz 1 einer Säurezahl von 30 mg KOH/g und einer Viskosität von 3,5 dPas (55 %ig in EEP).

**Herstellbeispiel 2**

**Die Herstellung einer Polyesterharz-Vorstufe 2**

In einem für Polykondensationreaktionen geeigneten Stahlreaktor wurden 297,2 Gewichtsteile Hydroxypivalinsäureneopentylglykolester, 32,8 Gewichtsteile Phthalsäureanhydrid, 346,4 Gewichtsteile Isophthalsäure, 5,7 Gewichtsteile 2-Butyl-2-ethylpropandiol-1,3, 133,5 Neopentylglykol und 11,2 Gewichtsteile Cyclohexan vorgelegt. Anschließend wurde aufgeheizt, und das Kondensationswasser wurde kontinuierlich entfernt, bis eine Säurezahl von 3,5 mg KOH/g erreicht war. Anschließend wurde die Reaktionsmischung auf 60 °C abgekühlt, und es wurde mit Methylethylketon ein Festkörpergehalt von 80 Gew.-% eingestellt. Die Viskosität des resultierenden Polyesterharzes 2 betrug 3,5 dPas (23°C, 60 %ig in EEP).

**Herstellbeispiel 3**

**Die Herstellung eines in Wasser dispergierten Polyurethanharzes 3**

In einem für die Polyurethanharzsynthese geeigneten Stahlreaktor wurden 264,7 Gewichtsteile der Polyesterharz-Vorstufe des Herstellbeispiels 2, 2,3 Gewichtsteile-Butyl-2-ethylpropandiol-1,3, 24,4 Gewichtsteile Dimethylolpropionsäure und 112,4 Gewichtsteile m-Tetramethylxylylendiisocyanat vorgelegt und bei 82°C Produkttemperatur reagieren lassen, bis ein konstanter Isocyanatgehalt erreicht war. Danach wurden 36,2 Gewichtsteile Trimethylolpropan in einer Portion zugesetzt, und es wurde bis zur Beendigung der Reaktion weiter erhitzt. Anschließend wurden 44,5 Gewichtsteile Methylethylketon hinzugegeben. Nach 30minütigem Rühren wurde mit 13 Gewichtsteilen Dimethylethanolamin neutralisiert. Das resultierende Polyurethanharz wurde in 480 Gewichtsteilen 60°C warmem deionisiertem Wassers dispergiert. Anschließend wurde das Methylethylketon im Vakuum abdestilliert. Die resultierende Polyurethandispersion wurde mit deionisiertem Wasser auf einen Festkörpergehalt von 40 Gew.-% eingestellt. Die resultierende Dispersion war frei von Gelteilchen, homogen und wies eine Säurezahlen von 30 mg KOH/g Festharz und einen pH-Wert von 7,2 auf.

**Herstellbeispiel 4**

**Die Herstellung einer Polyacrylatharzdispersion 4**

In einem für die Polymerisation geeigneten Stahlreaktor, ausgestattet mit Monomerzulauf, Initiatorzulauf, Temperaturmessvorrichtungen, Ölheizung und Rückflußkühler wurden 94 Gewichtsteile Methylisobutylketon eingewogen

und auf 110°C erhitzt. Hierzu dosierte man unter Rühren innerhalb von drei Stunden gleichmäßig eine Mischung aus 32,9 Gewichtsteilen Styrol, 38,3 Gewichtsteilen Methylmethacrylat, 22,0 Gewichtsteilen Laurylmethacrylat, 49,5 Gewichtsteilen Hydroxyethylmethacrylat und 43,9 Gewichtsteilen Butylmethacrylat. Gleichzeitig mit diesem Zulauf wurde der Initiatorzulauf gestartet. Die Initiatorlösung (11,3 Gewichtsteile tert.-Butylperoxyethylhexanoat in 25,8 Gewichtsteilen Methylisobutylketon) wurde gleichmäßig parallel zum ersten Zulauf zur Reaktionsmischung zudosiert. Anschließend wurde die Reaktionsmischung während einer Stunde auf 110°C erhitzt.

Anschließend wurde bei 110°C innerhalb von eineinhalb Stunden eine Monomermischung aus 14,1 Gewichtsteilen Styrol, 16,4 Gewichtsteilen Methylmethacrylat, 9,4 Gewichtsteilen Laurylmethacrylat, 52,4 Gewichtsteilen Hydroxyethylmethacrylat, 18,8 Gewichtsteilen Butylmethacrylat und 15,9 Gewichtsteilen Acrylsäure zudosiert. Gleichzeitig wurde mit dem Zulauf einer Initiatormischung aus 16,6 Gewichtsteilen Methylisobutylketon und 7,5 Gewichtsteilen tert.-Butylperoxyethylhexanoat begonnen. Der Initiatorzulauf wurde während zwei Stunden fortgesetzt.

Danach wurde die Reaktionsmischung während zwei Stunden auf 110°C erhitzt. Nach dieser Zeit wurden 17,5 Gewichtsteile Dimethylethanolamin hinzugegeben. Das resultierende Reaktionsgemisch wurde bei 80 °C in 149,5 Gewichtsteilen deionisiertem Wasser dispergiert und während einer Stunde bei 80 °C gehalten. Anschließend wurden 330 Gewichtsteile deionisiertes Wasser zugesetzt, und das Methylisobutylketon wurde im Vakuum abdestilliert.

Die resultierende Polyacrylatharzdispersion 4 wurde mit deionisiertem Wasser auf einen Festkörpergehalt von 40 Gew.-% eingestellt. Sie wies bei einem pH-Wert von 7,5 eine Säurezahl von 40 mg KOH/g Festharz auf.

**Herstellbeispiel 5**

**Die Herstellung eines erfindungsgemäß zu verwendenden hydrophoben Polyesters 5**

In einem Stahlreaktor wurden 308 Gewichtsteile Hexahydrophthalsäureanhydrid und 134 Gewichtsteile Trimethylolpropan eingewogen und auf 150°C erhitzt. Anschließend wurden hierzu während einer Stunde gleichmäßig 457 Gewichtsteile Versaticsäure®-glycidylester (Cardura® E 10) zudosiert. Die Reaktionsmischung wurde so lange bei 150 °C gehalten, bis eines Säurezahl <3 mg KOH/g erreicht war. Der resultierende Polyester 5 wurde bei 120 °C mit Butylglykolacetat auf ein Feststoffgehalt von 80 Gew.-% eingestellt. Die Viskosität der Anlösung lag bei 28 dPas.

**Herstellbeispiel 6**

**Die Herstellung eines erfindungsgemäß zu verwendenden hydrophoben Polyesters 6**

Es wurden ein Mol Äpfelsäure mit zwei Molen Versaticsäure®-glycidylester (Cardura® E 10) so lange umgesetzt, bis eines Säurezahl <3 mg KOH/g erreicht war. Der resultierende Äpfelsäureester 6 wurde mit Butylglykolacetat vermischt, so daß eine 80 Gew.-% ige Anlösung resultierte.

**Beispiel 1**

**Herstellung und Verwendung des erfindungsgemäßen Beschichtungsstoffs 1**

**1.1 Die Herstellung der Komponente (I)**

Zur Herstellung der Komponente (I) wurden die folgenden Bestandteile durch Mischen mittels eines Rührers (600 U/min) miteinander vermischt:

58,0 Gewichtsteile des Polyacrylatharzes 1 des Herstellbeispiels 1,

16 Gewichtsteile des hydrophoben Polyesters 5 des Herstellbeispiels 5,

11,5 Gewichtsteile Butylglykolacetat

2,4 Gewichtsteile EEP,

7,5 Gewichtsteile eines handelsüblichen Benetzungsmittels (Tensid S der Firma Biesterfeld, 50 %-ig in Butylglykol),

1 Gewichtsteil eines Verlaufmittels auf Basis eines polyethermodifizierten Dimethylsiloxancopolymerisats (Byk$^R$ 331 der Firma Byk Gulden),

0,8 Gewichtsteile eines handelsüblichen HALS-Lichtschutzmittels (Tinuvin$^R$ 292 der Firma Ciba) und

0,8 Gewichtsteile eines handelsüblichen UV-Absorbers (Tinuvin$^R$ 1130 der Firma Ciba).

**1.2 Die Herstellung der Komponente (II)**

Zur Herstellung der Komponente (II) wurden 51,2 Gewichtsteile Desmodur® VPLS 2025/1 (trimeres Polyisocyanat auf Basis von Hexamethylendiisocyanat der Firma Bayer), 15,3 Gewichtsteile Desmodur® VPLS 2102 (Polyisocyanat auf Basis von Hexamethylendiisocyanat-allophanat der Firma Bayer) und 33,5 Gewichtsteile Butylglykolacetat miteinander vermischt.

**1.3 Die Herstellung der Komponente (III)**

Zur Herstellung der Komponente (III) wurden unter Rühren 37,9 Gewichtsteile deionisiertes Wasser, 0,2 Gewichtsteile Dimethylethanolamin, 1,5 Gewichtsteile Butylglykol, und 0,4 Gewichtsteile eines handelsüblichen Verdikkungsmittels auf Polyurethanbasis (Dapral® T210), 20 Gewichtsteile der Polyacrylatharzdispersion 4 des Herstellbeispiels 4 und 40 Gewichtsteile der Polyurethanharzdispersion 3 des Herstellbeispiels 3 miteinander vermischt.

**1.4 Die Herstellung eines erfindungsgemäßen Klarlacks**

Zur Herstellung des erfindungsgemäßen Klarlacks wurden 25 Gewichtsteile der Komponente (II) in 25 Gewichtsteile der Komponente (I) per Hand eingerührt.

Die resultierende Mischung (I/II) wurde in 50 Gewichtsteile der Komponente (III) eingerührt. Hierzu wurde ein Rührer verwendet. Der resultierende erfindungsgemäße Klarlack 1.4 wurde durch Zugabe von 25 Gewichtsteilen deionisiertem Wasser auf Spritzviskosität eingestellt.

**1.5 Die Herstellung erfindungsgemäßer Beschichtungen und Prüftafeln**

Phosphatierte Stahltafeln, welche in üblicher und bekannter Weise mit einem handelsüblichen Elektrotauchlack und einem handelsüblichen Füller beschichtet waren, wurden mit einem Wasserbasislack gemäß der Europäischen Patentschrift EP-A-0 279 813 in einer Stärke von 12 bis 15 µm beschichtet. Der Wasserbasislack wurde während fünf Minuten bei Raumtemperatur und während zehn Minuten bei 60°C vorgetrocknet. Hiernach wurde der erfindungsgemäße Klarlack in zwei Spritzgängen mit drei bis vier Minuten währender Zwischenablüftzeit auf die Wasserbasislackschicht appliziert.

Die resultierenden Lackschichten wurden während 10 Minuten bei Raumtemperatur abgelüftet und während 45 Minuten bei 60°C im Umluftofen getrocknet. Die so erhaltenen mehrschichtigen Lackierungen wiesen hervorragende anwendungstechnische Eigenschaften auf. Die Ergebnisse der betreffenden Untersuchungen finden sich in der Tabelle.

Hierbei wurden der Glanz bei 20° und der Grauschleier nach DIN 67530 mit dem Haze-Meßgerät Microglass Haze der Firma Byk-Gardner gemessen.

**Beispiel 2**

**Herstellung und Verwendung des erfindungsgemäßen Beschichtungsstoffs 2**

Beispiel 1 wurde wiederholt, nur daß diesmal der hydrophobe Polyester 5 des Herstellbeispiels 5 nicht in der Komponente (I), sondern in der Komponente (III) enthalten war. Es wurden die gleichen hervorragenden anwendungstechnischen Eigenschaften wie bei Beispiel 1 erhalten.

**Beispiel 3**

**Herstellung und Verwendung des erfindungsgemäßen Beschichtungsstoffs 3**

Beispiel 1 wurde wiederholt, nur daß anstelle des dort verwendeten hydrophoben Polyesters 5 des Herstellbeispiels 5 der hydrophobe Polyester 6 des Herstellbeispiels 6 verwendet wurde. Es wurden die gleichen vorteilhaften Ergebnisse wie bei Beispiel 1 erhalten.

**Beispiel 4**

**Herstellung und Verwendung des erfindungsgemäßen Beschichtungsstoffs 4**

Beispiel 2 wurde wiederholt, nur daß diesmal der hydrophobe Polyester 6 des Herstellbeispiels 6 nicht in der Komponente (I), sondern in der Komponente (III) enthalten war. Es wurden die gleichen hervorragenden anwendungstechnischen Eigenschaften wie bei Beispiel 1 erhalten.

**Vergleichsversuch V1**

**Herstellung des nicht erfindungsgemäßen Beschichtungsstoffs V1**

Beispiel 1 wurde wiederholt, nur daß kein erfindungsgemäß zu verwendender hydrophober Polyester und anstelle der Komponente (I) des Beispiels 1 die folgende Komponente (I) verwendet wurde:

74 Gewichtsteile des Polyacrylatharzes 1 des Herstellbeispiels 1,

10 Gewichtsteile Butylglykolacetat

5,9 Gewichtsteile EEP,

7,5 Gewichtsteile eines handelsüblichen Benetzungsmittels (Tensid S der Firma Biesterfeld, 50 %-ig in Butylglykol),

1 Gewichtsteil eines Verlaufmittels auf Basis eines polyethermodifizierten Dimethylsiloxancopolymerisats (Byk$^R$ 331 der Firma Byk Gulden),

0,8 Gewichtsteile eines handelsüblichen HALS-Lichtschutzmittels (Tinuvin$^R$ 292 der Firma Ciba) und

0,8 Gewichtsteile eines handelsüblichen UV-Absorbers (Tinuvin$^R$ 1130 der Firma Ciba).

Die erhaltenen Testergebnisse werden in der Tabelle denjenigen des Beispiels 1 gegenübergestellt. Der Vergleich belegt die Vorteilhaftigkeit des erfindungsgemäßen Beschichtungsstoffs.

**Tabelle: Anwendungstechnische Eigenschaften des erfindungsgemäßen Beschichtungsstoffs 1 gemäß Beispiel 1 und des nicht erfindungsgemäßen Beschichtungsstoffs V1 gemäß Vergleichsversuch V1**

| Eigenschaft | Beispiel 1 | Vergleichsversuch V1 |
|---|---|---|
| Glanz | 88 | 87 |
| Haze | 9,8 | 11,5 |
| Schichtdicke (µm) | 50 | 50 |
| Kochergrenze (Keiltafel) | | |
| Trocknung: 45 Minuten, 60°C | 75 µm | 50 µm |
| Trocknung: Raumtemperatur, 12 Stunden | 100 µm | 75 µm |
| optischer Eindruck (visuell) | sehr klar | klar |
| Verlauf (visuell) | sehr gut | gut |

**Patentansprüche**

**1.** Aus mindestens drei Komponenten bestehender thermisch oder thermisch und mit aktinischer Strahlung härtbarer Beschichtungsstoff, enthaltend

(I) eine Komponente, enthaltend mindestens ein oligomeres oder polymeres Harz mit funktionellen Gruppen, die mit Isocyanatgruppen reagieren, als Bindemittel (A),
(II) eine Komponente, enthaltend mindestens ein Polyisocyanat als Vernetzungsmittel (B), und
(III) eine Komponente, welche Wasser enthält,

**dadurch gekennzeichnet, daß** die Komponente (I) und/oder (III) mindestens einen niedermolekularen und/oder oligomeren, im wesentlichen unverzweigten, hydrophoben Polyester (C) mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton, enthält oder enthalten.

**2.** Der Beschichtungsstoff nach Anspruch 1, **dadurch gekennzeichnet, daß** der niedermolekulare und/oder oligomere, im wesentlichen unverzweigte, hydrophobe Polyester die allgemeine Formel 1 aufweist

$$[R^1\text{-CH (OH)-CH}_2\text{-OOC-}]_2R \qquad (1),$$

worin die Variablen die folgende Bedeutung haben:

R = substituierter oder unsubstituierter zweiwertiger $C_1$- bis $C_{20}$-Alkandiyl-, $C_2$- bis $C_{20}$-Alkendiyl-, $C_4$- bis $C_{20}$-Cycloalkandiyl- oder -Cycloalkendiyl-, $C_6$- bis $C_{12}$-Aryliden- oder zweiwertiger $C_6$- bis $C_{20}$-Arylalkyl-, -Arylalkenyl-, -Arylcycloalkyl-, oder -Arylcycloalkenylrest; oder
substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclischungesättigt-aromatischer Rest, welcher mindestens eine Carbonsäureestergruppe enthält;
$R^1$ = Wasserstoffatom oder einwertiger substituierter oder unsubstituierter $C_1$- bis $C_{20}$-Alkyl-, $C_2$- bis $C_{20}$-Alkenyl-, $C_4$-bis $C_{12}$-Cycloalkyl- oder -Cycloalkenyl-,
$C_6$- bis $C_{12}$-Aryl- oder $C_6$- bis $C_{20}$-Arylalkyl-, -Arylalkenyl-, -Arylcycloalkyl-, -Arylcycloalkenyl-, - Alkylaryl-, -Alkenylaryl-, -Cycloalkylaryl-, -Cycloalkenylaryl-, - Alkylcycloalkyl-, -Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder -Cycloalkenylalkenylrest.

**3.** Der Beschichtungsstoff nach Anspruch 2, **dadurch gekennzeichnet, daß** der Rest R mindestens eine Hydroxylgruppe enthält.

**4.** Der Beschichtungsstoff nach Anspruch 2 oder 3, **dadurch gekennzeichnet, daß** der Rest $R^1$ substituiert ist, insbesondere mit mindestens einem der folgenden Substituenten:

-F, -Cl, -Br, -I, -CN, -NO2,
-OH, $-OR^2$, -SH, $-SR^2$, -NH2, $-NHR^2$, $-N(NR^2)2$ und/oder $-OOC-R^2$, worin die Variable $R^2$ die Bedeutung der Variablen $R^1$, ausgenommen das Wasserstoffatom, hat.

**5.** Der Beschichtungsstoff nach einem der Ansprüche 2 bis 4, **dadurch gekennzeichnet, daß** es sich bei dem Rest $R^1$ um eine einfach substitierte Methylgruppe handelt, insbesondere um eine Methylgruppe, welche mit $-OOC-R^2$, worin der Rest $R^2$ insbesondere einen verzweigten $C_4$- bis $-C_{12}$-Alkylrest bezeichnet, einfach substitiert ist.

**6.** Der Beschichtungsstoff nach einem der Ansprüche 1 bis 5, **dadurch gekennzeichnet, daß** es sich bei den funktionellen Gruppen, die mit Isocyanatgruppen reagieren, um Hydroxylgruppen handelt.

**7.** Der Beschichtungsstoff nach einem der Ansprüche 1 bis 6, **dadurch gekennzeichnet, daß** die Komponente (III) mindestens ein Bindemittel (A) enthält.

**8.** Der Beschichtungsstoff nach einem der Ansprüche 1 bis 7, **dadurch gekennzeichnet, daß** die Komponente (I) mindestens ein in Wasser lösliches oder dispergierbares Bindemittel (A) und/oder Komponente (III) mindestens ein in Wasser gelöstes oder dispergiertes Bindemittel (A) enthält oder enthalten.

**9.** Der Beschichtungsstoff nach Anspruch 8, **dadurch gekennzeichnet**, das die Bindemittel (A) entweder

(i) funktionelle Gruppen, die durch Neutralisationsmittel und/oder Quaternisierungsmittel in Kationen überführt werden können, und/oder kationische Gruppen, insbesondere Sulfoniumgruppen,
oder
(ii) funktionelle Gruppen, die durch Neutralisationsmittel in Anionen überführt werden können, und/oder anionische Gruppen, insbeondere Carbonsäure- und/oder Carboxylatgruppen,
und/oder
(iii) nichtionische hydrophile Gruppen, insbesondere Poly(alkylenether)-Gruppen,

enthalten.

10. Der Beschichtungsstoff nach Anspruch 9, **dadurch gekennzeichnet, daß** die Bindemittel (A) Carbonsäure- und/oder Carboxylatgruppen (ii) enthalten.

11. Der Beschichtungsstoff nach einem der Ansprüche 1 bis 10, **dadurch gekennzeichnet, daß** in der Komponente (III) ein Teil der Bindemittel (A) oder alle Bindemittel (A) in Pulverslurry-Teilchen vorliegen.

12. Der Beschichtungsstoff nach Anspruch 10 oder 11, **dadurch gekennzeichnet, daß** die Komponente (I) und/oder (III) als Bindemittel (A)

(A1) mindestens ein in einem oder mehreren organischen, gegebenenfalls wasserverdünnbaren Lösemitteln lösliches oder dispergierbares, Hydroxylgruppen und Carbonsäure- und/oder Carboxlylatgruppen enthaltendes Acrylatcopolymerisat (A1) mit einem zahlenmittleren Molekulargewicht Mn zwischen 1000 und 30.000 Dalton, einer OH-Zahl von 40 bis 200 mgKOH/g und einer Säurezahl von 5 bis 150 mgKOH/g und/oder
(A2) mindestens ein in einem oder mehreren organischen, gegebenenfalls wasserverdünnbaren Lösemitteln lösliches oder dispergierbares, Hydroxylgruppen und Carbonsäure- und/oder Carboxlylatgruppen enthaltendes hydrophiles wasserdispergierbares Polyesterharz (A2) mit einem zahlenmittleren Molekulargewicht Mn zwischen 1000 und 30.000 Dalton, einer OH-Zahl von 30 bis 250 mgKOH/g und einer Säurezahl von 15 bis 150 mgKOH/g und/oder
(A3) mindestens ein in einem oder mehreren organischen, gegebenenfalls wasserverdünnbaren Lösemitteln lösliches oder dispergierbares, Hydroxylgruppen und Carbonsäure- und/oder Carboxlylatgruppen enthaltendes Polyurethanharz (A3) mit einem zahlenmittleren Molekulargewicht Mn zwischen 1000 und 30.000 Dalton, einer OH-Zahl von 20 bis 200 mgKOH/g und einer Säurezahl von 5 bis 150 mgKOH/g

enthalten.

13. Der Beschichtungsstoff nach einem der Ansprüche 1 bis 12, **dadurch gekennzeichnet, daß** die Komponenten (I), (II) und/oder (III) als weiteres Vernetzungsmittel (B') mindestens eine Epoxidverbindung mit mindestens zwei Epoxidgruppen pro Molekül, mindestens ein Aminoplastharz, mindestens ein blockiertes Polyisocyanat, mindestens ein Tris(alkoxycarbonylamino)triazin, mindestens ein Siloxan, mindestens ein Polyanhydrid und/oder mindestens ein beta-Hydroxyalkylamid enthält.

14. Der Beschichtungsstoff nach einem der Ansprüche 1 bis 13, **dadurch gekennzeichnet, daß** er

(V) eine feinteilige, feste Komponente, welche mindestens ein wasserlösliches oder dispergierbares, feinteiliges, festes Bindemittel (A) enthält,

aufweist.

15. Der Beschichtungsstoff nach einem der Ansprüche 1 bis 14, **dadurch gekennzeichnet, daß** die niedermolekulare Polyester (C) herstellbar sind durch die Umsetzung von Hydroxydicarbonsäuren mit Epoxiden, insbesondere mit glycidylgruppenhaltigen Epoxiden.

16. Der Beschichtungsstoff nach einem der Ansprüche 1 bis 14, **dadurch gekennzeichnet, daß** die oligomeren Polyester (C) herstellbar sind durch die Umsetzung von Dicarbonsäuren mit Diolen, Triolen oder Tetrolen und Umsetzung der resultierenden Polyester mit Epoxiden, insbesondere mit glycidylgruppenhaltigen Epoxiden.

17. Der Beschichtungsstoff nach Anspruch 16, **dadurch gekennzeichnet, daß** das molare Verhältnis von Hydroxylgruppen zu Carboxylgruppen im Falle der Diole bei 1,0, im Falle der Triole bei 1,5 und im Falle der Tetrole bei 2,0 liegt.

18. Verwendung des Beschichtungsstoffs gemäß einem der Ansprüche 1 bis 17 für die Herstellung einschichtiger oder mehrschichtiger klarer oder pigmentierter Lackierungen für die Automobilerst- und - reparaturlackierung, die industrielle Lackierung, inclusive Coil Coating und Container Coating, die Kunststofflackierung und die Möbellackierung.

19. Die Verwendung nach Anspruch 18, **dadurch gekennzeichnet, daß** der wäßrige Beschichtungsstoff als Klarlack, Wasserbasislack, Unidecklack oder Grundierung oder Füller in der Automobilerst- und - reparaturlackierung verwendet wird.

## Claims

1. Coating material consisting of at least three components and curable thermally or both thermally and with actinic radiation, comprising

    (I) a component comprising at least one oligomeric or polymeric resin containing functional groups which react with isocyanate groups, as binder (A),
    (II) a component comprising at least one polyisocyanate as crosslinking agent (B), and
    (III) a component which comprises water,

    **characterized in that** component (I) and/or (III) comprise or comprises at least one low molecular weight and/or oligomeric, substantially unbranched, hydrophobic polyester (C) containing at least two hydroxyl groups in the molecule and having an OH number of from 56 to 500 mg KOH/g, an acid number <10 mg KOH/g and a number-average molecular weight Mn of from 300 to 2 000 daltons.

2. Coating material according to Claim 1, **characterized in that** the low molecular weight and/or oligomeric, substantially unbranched, hydrophobic polyester has the general formula 1

    $$[R^1\text{-CH (OH) -CH}_2\text{-OOC-]}_2R \qquad (1)$$

    in which the variables have the following meaning:

    R = substituted or unsubstituted divalent $C_1$ to $C_{20}$ alkanediyl, $C_2$ to $C_{20}$ alkenediyl, $C_4$ to $C_{20}$ cycloalkanediyl or cycloalkenediyl, $C_6$ to $C_{12}$ arylidene or divalent $C_6$ to $C_{20}$ arylalkyl, arylalkenyl, arylcycloalkyl or arylcycloalkenyl radical; or
    substituted or unsubstituted divalent aliphatic, cycloaliphatic, acyclic or cyclic olefinically unsaturated, aromatic, aliphatic-aromatic, cycloaliphatic-aromatic, acyclic unsaturated aromatic or cyclic unsaturated aromatic radical which contains at least one carboxylic ester group;
    $R^1$ = hydrogen atom or monovalent substituted or unsubstituted $C_1$ to $C_{20}$ alkyl, $C_2$ to $C_{20}$ alkenyl, $C_4$ to $C_{12}$ cycloalkyl or cycloalkenyl, $C_6$ to $C_{12}$ aryl or $C_6$ to $C_{20}$ arylalkyl, arylalkenyl, arylcycloalkyl, arylcycloalkenyl, alkylaryl, alkenylaryl, cycloalkylaryl, cycloalkenylaryl, alkylcycloalkyl, alkylcycloalkenyl, alkenylcycloalkyl, alkenylcycloalkenyl, cycloalkylalkyl, cycloalkenylalkyl, cycloalkylalkenyl or cycloalkenylalkenyl radical.

3. Coating material according to Claim 2, **characterized in that** the radical R contains at least one hydroxyl group.

4. Coating material according to Claim 2 or 3, **characterized in that** the radical $R^1$ is substituted, in particular by at least one of the following substituents:

    -F, -Cl, -Br, -I, -CN, -NO2,
    -OH, -$OR^2$, -SH, -$SR^2$, -NH2, -$NHR^2$, -N($NR^2$)2 and/or -OOC-$R^2$, in which the variable $R^2$ has the definition of the variables $R^1$, with the exception of the hydrogen atom.

5. Coating material according to one of Claims 2 to 4, **characterized in that** the radical $R^1$ is a monosubstituted methyl group, in particular a methyl group which is monosubstituted by -OOC-$R^2$, in which the radical $R^2$ denotes in particular a branched $C_4$ to $C_{12}$ alkyl radical.

6. Coating material according to one of Claims 1 to 5, **characterized in that** the functional groups which react with isocyanate groups are hydroxyl groups.

7. Coating material according to one of Claims 1 to 6, **characterized in that** the component (III) comprises at least one binder (A).

8. Coating material according to one of Claims 1 to 7, **characterized in that** component (I) comprises at least one binder (A) which is dispersible or soluble in water and/or component (III) comprises at least one binder (A) which is dispersed or dissolved in water.

9. Coating material according to Claim 8, **characterized in that** the binders (A) contain either

(i) functional groups which may be converted into cations by neutralizing agents and/or quarternizing agents, and/or cationic groups, in particular sulfonium groups
or
(ii) functional groups which may be converted into anions by neutralizing agents, and/or anionic groups, in particular carboxylic acid and/or carboxylate groups
and/or
(iii) nonionic hydrophilic groups, in particular poly(alkylene ether) groups

**10.** Coating material according to Claim 9, **characterized in that** the binders (A) contain carboxylic acid groups and/or carboxylate groups (ii).

**11.** Coating material according to one of Claims 1 to 10, **characterized in that** in component (III) some of the binders (A) or all binders (A) are present in powder slurry particles.

**12.** Coating material according to Claim 10 or 11, **characterized in that** component (I) and/or (III) comprise as binders (A)

(A1) at least one acrylate copolymer (A1) which is dispersible or soluble in one or more organic, optionally water-dilutable solvents, contains hydroxyl groups and carboxylic acid groups and/or carboxylate groups, and has a number-average molecular weight Mn of between 1 000 and 30 000 daltons, an OH number of from 40 to 200 mg KOH/g and an acid number of from 5 to 150 mg KOH/g and/or
(A2) at least one hydrophilic water-dispersible polyester resin (A2) which is dispersible or soluble in one or more organic, optionally water-dilutable solvents, contains hydroxyl groups and carboxylic acid groups and/or carboxylate groups, and has a number-average molecular weight Mn of between 1 000 and 30 000 daltons, an OH number of from 30 to 250 mg KOH/g and an acid number of from 15 to 150 mg KOH/g and/or
(A3) at least one polyurethane resin (A3) which is dispersible or soluble in one or more organic, optionally water-dilutable solvents, contains hydroxyl groups and carboxylic acid groups and/or carboxylate groups, and has a number-average molecular weight Mn of between 1 000 and 30 000 daltons, an OH number of from 20 to 200 mg KOH/g and an acid number of from 5 to 150 mg KOH/g.

**13.** Coating material according to one of Claims 1 to 12, **characterized in that** components (I), (II) and/or (III) comprise as further crosslinking agent (B') at least one epoxide compound containing at least two epoxide groups per molecule, at least one amino resin, at least one blocked polyisocyanate, at least one tris(alkoxycarbonylamino)triazine, at least one siloxane, at least one polyanhydride and/or at least one beta-hydroxyalkylamide.

**14.** Coating material according to one of Claims 1 to 13, **characterized in that** it comprises

(V) a finely divided solid component containing at least one water-soluble or dispersible, finely divided solid binder (A).

**15.** Coating material according to one of Claims 1 to 14, **characterized in that** the low molecular mass polyesters (C) are preparable by reacting hydroxydicarboxylic acids with epoxides, especially with glycidyl-containing epoxides.

**16.** Coating material according to one of Claims 1 to 14, **characterized in that** the oligomeric polyesters (C) are preparable by reacting dicarboxylic acids with diols, triols or tetrols and reacting the resultant polyesters with epoxides, in particular with glycidyl-containing epoxides.

**17.** Coating material according to Claim 16, **characterized in that** the molar ratio of hydroxyl groups to carboxyl groups in the case of the diols is 1.0, in the case of the triols is 1.5 and in the case of the tetrols is 2.0.

**18.** Use of the coating material according to one of Claims 1 to 17 for producing single-coat or multicoat clear or pigmented coating systems for automotive OEM finishing and automotive refinish, for industrial coating, including coil coating and container coating, for the coating of plastics, and for furniture coating.

**19.** Use according to Claim 18, **characterized in that** the aqueous coating material is used as clearcoat material, aqueous basecoat material, solid-color topcoat material or primer or primer-surfacer in automotive OEM finishing or automotive refinish.

## Revendications

1. Substance de revêtement constituée d'au moins trois composants, durcissable à la chaleur ou à la chaleur et par rayonnement actinique, comprenant :

   (I) un composant contenant au moins une résine oligomère ou polymère avec des groupements fonctionnels, qui réagissent avec des groupements isocyanate, comme liant (A),
   (II) un composant contenant au moins un polyisocyanate comme agent de réticulation (B) et
   (III) un composant qui contient de l'eau,
   **caractérisée en ce que** le ou les composants (I) et/ou (III) contient ou contiennent au moins un polyester (C) de faible poids moléculaire et/ou oligomère, sensiblement non ramifié, hydrophobe, ayant au moins deux groupements hydroxyle dans la molécule, un indice OH de 56 à 500 mg de KOH/g, un indice d'acidité < 10 mg de KOH/g et un poids moléculaire moyen en nombre Mn de 300 à 2000 daltons.

2. Substance de revêtement selon la revendication 1, **caractérisée en ce que** le polymère de faible poids moléculaire et/ou oligomère, sensiblement non ramifié, hydrophobe, présente la formule 1 générale :

   $$[R^1\text{-}CH(OH)\text{-}CH_2\text{-}OOC\text{-}]_2R \qquad (1)$$

   dans laquelle les variables ont les significations suivantes :

   R représente un radical divalent substitué ou non substitué alcanediyle en $C_1$-$C_{20}$, alcènediyle en $C_2$-$C_{20}$, cycloalcanediyle ou cycloalcènediyle en $C_4$-$C_{20}$, arylidène en $C_6$-$C_{12}$ ou arylalkyle, arylalcényle, arylcycloalkyle ou arylcycloalcényle en $C_6$-$C_{20}$; ou
   un radical divalent substitué ou non substitué aliphatique, cycloaliphatique, acyclique ou cyclique à insaturation oléfinique, aromatique, aliphatique-aromatique, cycloaliphatique-aromatique, acyclique-insaturé-aromatique ou cyclique-insaturé-aromatique qui contient au moins un groupement ester d'acide carboxylique;
   $R^1$ représente un atome d'hydrogène ou un radical monovalent substitué ou non substitué alkyle en $C_1$-$C_{20}$, alcényle en $C_2$-$C_{20}$, cycloalkyle ou cycloalcényle en $C_4$-$C_{12}$, aryle en $C_6$-$C_{12}$ ou arylalkyle, arylalcényle, arylcycloalkyle, arylcycloalcényle, alkylaryle, alcénylaryle, cycloalkylaryle, cycloalcénylaryle, alkylcycloalkyle, alkylcycloalcényle, alcénylcycloalkyle, alcénylcycloalcényle, cycloalkylalkyle, cycloalcénylalkyle, cycloalkylalcényle ou cycloalcénylalcényle en $C_6$-$C_{20}$.

3. Substance de revêtement selon la revendication 2, **caractérisée en ce que** le radical R contient au moins un groupement hydroxyle.

4. Substance de revêtement selon la revendication 2 ou 3, **caractérisée en ce que** le radical $R^1$ est substitué, en particulier avec au moins l'un des substituants suivants :

   -F, -Cl, -Br, -I, -CN, $-NO_2$,
   -OH, $-OR^2$, -SH, $-SR^2$, -NH2, $-NHR^2$, $-N(NR^2)_2$ et/ou $-OOC-R^2$, où la variable $R^2$ a la signification de la variable $R^1$, hormis l'atome d'hydrogène.

5. Substance de revêtement selon l'une quelconque des revendications 2 à 4, **caractérisée en ce que** le radical $R^1$ est un groupement méthyle substitué une fois, en particulier un groupement méthyle qui est substitué une fois avec $-OOC-R^2$, où le radical $R^2$ désigne en particulier un radical alkyle en $C_4$-$C_{12}$ ramifié.

6. Substance de revêtement selon l'une quelconque des revendications 1 à 5, **caractérisée en ce que** les groupements fonctionnels, qui réagissent avec des groupements isocyanate, sont des groupements hydroxyle.

7. Substance de revêtement selon l'une quelconque des revendications 1 à 6, **caractérisée en ce que** le composant (III) contient au moins un liant (A).

8. Substance de revêtement selon l'une quelconque des revendications 1 à 7, **caractérisée en ce que** le composant (I) contient au moins un liant (A) soluble ou dispersable dans l'eau et/ou le composant (III) contient au moins un liant (A) dissous ou dispersé dans l'eau.

9. Substance de revêtement selon la revendication 8, **caractérisée en ce que** les liants (A) contiennent :

(i) des groupements fonctionnels qui peuvent être convertis en cations par des agents de neutralisation et/ou des agents de quaternisation, et/ou des groupements cationiques, en particulier des groupements sulfonium, ou
(ii) des groupements fonctionnels qui peuvent être convertis en anions par des agents de neutralisation, et/ou des groupements anioniques, en particulier des groupements acide carboxylique et/ou des groupements carboxylate,
et/ou
(iii) des groupements non ioniques hydrophiles, en particulier des groupements poly(alkylène)éther.

**10.** Substance de revêtement selon la revendication 9, **caractérisée en ce que** les liants (A) contiennent des groupement acide carboxylique et/ou carboxylate (ii).

**11.** Substance de revêtement selon l'une quelconque des revendications 1 à 10, **caractérisée en ce qu'**une partie des liants (A) ou tous les liants (A) se présente ou se présentent sous la forme de particules de suspension pulvérulente dans le composant (III).

**12.** Substance de revêtement selon la revendication 10 ou 11, **caractérisée en ce que** le composant (I) et/ou le composant (III) contient ou contiennent comme liants (A) :

(A1) au moins un copolymère d'acrylate (A1) soluble ou dispersable dans un ou plusieurs solvants organiques éventuellement diluables dans l'eau, contenant des groupements hydroxyle et des groupements acide carboxylique et/ou des groupements carboxylate, avec un poids moléculaire moyen en nombre Mn entre 1000 et 30 000 daltons, un indice OH de 40 à 200 mg de KOH/g et un indice d'acidité de 5 à 150 mg de KOH/g et/ou
(A2) au moins une résine polyester (A2) soluble ou dispersable dans un ou plusieurs solvants organiques éventuellement diluables dans l'eau, hydrophyle contenant des groupements hydroxyle et des groupements acide carboxylique et/ou des groupements carboxylate, dispersable dans l'eau, avec un poids moléculaire moyen en nombre Mn entre 1000 et 30 000 daltons, un indice OH de 30 à 250 mg de KOH/g et un indice d'acidité de 15 à 150 mg de KOH/g et/ou
(A3) au moins une résine polyuréthanne (A3) soluble ou dispersable dans un ou plusieurs solvants organiques éventuellement diluables dans l'eau, contenant des groupements hydroxyle et des groupements acide carboxylique et/ou des groupements carboxylate, avec un poids moléculaire moyen en nombre Mn entre 1000 et 30 000 daltons, un indice OH de 20 à 200 mg de KOH/g et un indice d'acidité de 5 à 150 mg de KOH/g.

**13.** Substance de revêtement selon l'une quelconque des revendications 1 à 12, **caractérisée en ce que** les composants (I), (II) et/ou (III) contiennent comme autres agents de réticulation (B') au moins un composé d'époxyde avec au moins deux groupements époxyde par molécule, au moins une résine aminoplaste, au moins un polyisocyanate bloqué, au moins une tris(alcoxycarbonylamino)triazine, au moins un siloxane, au moins un polyanhydride et/ou au moins un bêta-hydroxyalkylamide.

**14.** Substance de revêtement selon l'une quelconque des revendications 1 à 13, **caractérisée en ce qu'**elle présente ;

(V) un composant solide finement divisé, qui contient au moins un liant (A) solide finement divisé, soluble ou dispersable dans l'eau.

**15.** Substance de revêtement selon l'une quelconque des revendications 1 à 14, **caractérisée en ce que** l'on peut fabriquer les polyesters (C) de faible poids moléculaire par réaction d'acides hydroxydicarboxyliques avec des époxydes, en particulier avec des époxydes contenant des groupements glycidyle.

**16.** Substance de revêtement selon l'une quelconque des revendications 1 à 14, **caractérisée en ce que** l'on peut fabriquer les polyesters (C) oligomères par réaction d'acides dicarboxyliques avec des diols, triols ou des tétrols et par réaction des polyesters obtenus avec des époxydes, en particulier des époxydes contenant des groupements glycidyle.

**17.** Substance de revêtement selon la revendication 16, **caractérisée en ce que** le rapport molaire des groupements hydroxyle aux groupements carboxylique est de 1,0 dans le cas des diols, de 1,5 dans le cas des triols et de 2,0 dans le cas des tétrols.

**18.** Utilisation de la substance de revêtement selon l'une quelconque des revendications 1 à 17 pour la fabrication

d'enductions claires ou pigmentées à une ou plusieurs couches pour les enductions de fond et les enductions de retouche pour automobiles, la peinture industrielle, notamment l'enduction sur bande et l'enduction de conteneurs, l'enduction de synthétiques et l'enduction de meubles.

**19.** Utilisation selon la revendication 18, **caractérisée en ce que** l'on utilise la substance de revêtement aqueuse comme vernis transparent, vernis à base d'eau, vernis de finition ou apprêt ou charge dans l'enduction de fond et l'enduction de retouche pour automobiles.